# EUROPEAN PATENT SPECIFICATION

(11) **EP 4 004 816 B1**
(45) Date of publication and mention of the grant of the patent: **20.11.2024**
(21) Application number: 20749894.0
(22) Date of filing: 30.07.2020
(51) Int. Cl.: G06K 19/07

(54) **DEVICE WITH BIOMETRIC-GATED DISPLAY**
VORRICHTUNG MIT BIOMETRISCH GESTEUERTER ANZEIGE
DISPOSITIF DOTÉ D'UN ÉCRAN À PORTAIL BIOMÉTRIQUE

(30) Priority: 30.07.2019 US 201916526504; 27.01.2020 US 202016773184
(43) Date of publication of application: 01.06.2022
(73) Proprietor: IDEX BIOMETRICS ASA, 0191 Oslo (NO)
(72) Inventor: MACKIN, Thomas A., 0191 Oslo (NO); LUDDEN, Christopher A., 0191 Oslo (NO); KNAUSZ, Imre, 0191 Oslo (NO); KUCHARCZYK, Alex, 0191 Oslo (NO); MCALEER, Anne L., 0191 Oslo (NO)
(74) Representative: Slingsby Partners LLP
(86) International application number: PCT/EP2020/071606
(87) International publication number: WO 2021/019056

(56) References cited:
- EP-A1- 3 001 372
- EP-A1- 3 065 098
- EP-A1- 3 121 779
- WO-A1-03/084124
- US-A1- 2010 019 032

## Description

### BACKGROUND

A smart card may refer to a device that includes an embedded integrated circuit chip and internal memory. That internal memory may be located on the integrated circuit chip, or be a separate chip embedded within the card. A smart card may be a contact card, a contactless card, or may be capable of operating as a contact and contactless card. Some types of smart cards may contain an on-card power source, such as a battery or solar cell. Smart cards exist in a wide variety of form factors, including plastic cards, key fobs, watches, wearables, electronic passports and USB-based tokens, and subscriber identification modules (SIMs) used in mobile phones.

A contact card can receive power from, and communicate with, a terminal (e.g. a card reader) by physically connecting to the terminal. For example, a contact card may comprise one or more contact pads or elements that provide electrical connectivity to the terminal when the card and terminal are brought into suitable physical contact (e.g. by inserting the card into a slot within a terminal).

A contactless card can receive power from, and communicate with, a terminal without direct physical contact between the terminal and the card. Typically, a contactless card communicates with a terminal via radio waves. The contactless card may include an antenna to receive an electromagnetic signal, such as a radio frequency (RF) signal, emitted from a terminal. Likewise, data from the card can be communicated back to the terminal by means of the card's antenna.

Some contactless cards are 'passive'. A passive card powers the embedded chip from energy harvested from the signal emitted by the terminal. One way to harvest energy from the emitted signal is to arrange the antenna as a coil that induces a voltage across its terminals by means of induction when receiving the emitted signal.

Smart card technology is being implemented within a variety of devices used to perform increasingly varied functions, for example to perform payments, grant a user physical access to a region of an environment, to store personal identification information of the user, identify or authenticate a user, etc.

The embodiments described below are provided by way of example only and are not limiting of implementations which solve any or all of the disadvantages of known smart cards.

EP 3065098 A1 describes a mobile terminal capable of performing simple pay using registered card information after information of a real card is registered at the mobile terminal. EP 121779 A1 describes a mobile terminal capable of effectively executing online and offline payments using an extended display and a finger scan, and a payment method using the same. EP 3001372 A1 describes an apparatus for limiting electronic transaction card (e-card) transactions when an associated consumer electronics (CE) device is not proximate to the e-card.

US 2010/01032 A1 describes a storage device storing a plurality of pieces of authentication information. The storage device includes a display allowing a user to determine the authentication information stored in the storage device and to select desired authentication information from among the authentication information displayed thereon. The storage device performs authentication processing on the authentication information selected by the user. The storage device may be a memory card having a display. The memory card may be used for various use purposes by changing information displayed thereon according to a desired purpose.

WO 03/084124 A1 describes an apparatus and method for effecting secure transactions in a contactless manner using biometric identity validation. The apparatus may include, for example, a biometric sensor that is operable to detect biometric information associated with a user of the apparatus. A processor that is accessible to the biometric sensor may be used to process the biometric information to verify the identity of the user. One or more antennae may also form part of the apparatus and may perform multiple functions. For example, the antennae may provide contactless communication with an external device and may also receive power from an external power source to power the device.

### SUMMARY

This summary is provided to introduce a selection of concepts that are further described below in the detailed description. This summary is not intended to identify key features or essential features of the claimed subject matter, nor is it intended to be used to limit the scope of the claimed subject matter.

Described herein there is provided a biometric module as claimed in claim 1 and a smart card as claimed in claim 15. A first aspect provides a module configured to perform processing as part of a device capable of performing contactless and/or contact communication with a terminal, the module comprising: a biometric sensor; one or more display screens; and one or more control units configured to: cause the biometric sensor to capture biometric data of a user which can be used to biometrically authenticate the user; obtain biometric authentication information indicating whether the user was biometrically authenticated based on the captured biometric data; and in response to the biometric authentication information indicating that the user was biometrically authenticated, select one or more categories of authenticated information from a plurality of categories of authenticated information based on one or more detected conditions, and cause the one or more display screens to display the one or more selected categories of authenticated information.

The one or more detected conditions may comprise an operating mode of the device and/or a location of the device.

The device may be operable in one or more of: (i) contactless mode where the device is in contactless communication with the terminal; (ii) contact mode where the device is in contact communication with the terminal; (iii) non-terminal transaction mode where the device is not in contactless or contact communication with the terminal, and (iv) non-terminal enrolment mode where the device is not in contactless or contact communication with the terminal and the device is being used for biometric registration.

The device may comprise an embedded chip configured to generate data for communication to the terminal to perform a first function associated with the device and the one or more control units may be configured to select at least one category of authenticated information that relates to the performance of the first function when the device is operating in contact mode or contactless mode.

The one or more control units may be configured to select a first set of the plurality of categories of authenticated information when the device is operating in a first mode and select a second set of the plurality of categories of authenticated information when the device is operating in a second mode.

The biometric authentication may comprise performing biometric matching between the biometric data captured by the biometric sensor and stored template data and the one or more detected conditions may comprise whether a matcher score exceeds a predetermined threshold.

The one or more display screens may comprise a plurality of display areas and the one or more control units may be further configured to select one or more of the plurality of display areas to display the one or more selected categories of authenticated information based on the one or more detected conditions.

The module may be powered by an external power source and the one or more control units may be further configured to, subsequent to causing the one or more display screens to display the one or more selected categories of authenticated information, determine whether the module is currently receiving power from an external power source and in response to determining that the module is not currently receiving power from an external power source, cause the one or more display screens to cease displaying the one or more selected categories of authenticated information.

The one or more control units may be further configured to: subsequent to causing the one or more display screens to display the one or more selected categories of authenticated information, cause the biometric sensor to capture proximity data indicative of whether the user is proximate the module; obtain proximity information indicating whether, based on the captured proximity data, the user is proximate the module; and in response to the proximity information indicating that the user is not proximate the module, cause the one or more display screens to cease displaying the one or more selected categories of authenticated information.

The module may further comprise one or more storage elements for storage of the one or more selected categories of authenticated information; and the one or more control units may be further configured to, after determining that the one or more display screens have ceased displaying the one or more selected categories of authenticated information, cause the one or more selected categories of authenticated to be removed from the one or more storage elements.

A second aspect provides a module configured to perform processing as part of a device capable of performing contactless and/or contact communication with a terminal, the module comprising: a biometric sensor; one or more display screens comprising a plurality of display areas; and one or more control units configured to: cause the biometric sensor to capture biometric data of a user which can be used to biometrically authenticate the user; obtain biometric authentication information indicating whether the user was biometrically authenticated based on the captured biometric data; in response to the biometric authentication information indicating that the user was biometrically authenticated, select one or more of the plurality of display areas based on one or more detected conditions, and display authenticated information on the one or more selected display areas; and subsequent to causing the selected display areas to display the authenticated information, determine whether the module is currently receiving power from an external power source and in response to determining that the module is not currently receiving power from an external power source, cause the selected display areas to cease displaying the authenticated information.

The one or more detected conditions may comprise an operating mode of the device.

The device may be operable in one or more of: (i) contactless mode where the device is in contactless communication with the terminal; (ii) contact mode where the device is in contact communication with the terminal; (iii) non-terminal transaction mode where the device is not in contactless or contact communication with the terminal, and (iv) non-terminal enrolment mode where the device is not in contactless or contact communication with the terminal and the device is being used for biometric registration.

The one or more control units may be further configured to cause the one or more display areas to display directions to aid the user in biometrically registering with the module in response to detecting that the device is operating in the non-terminal enrolment mode.

The one or more control units may be further configured to activate a first display area of the plurality of display areas in response to detecting that the device is operating in the contactless mode.

The one or more control units may be configured to alter one or more of a colour, size or graphic displayed by the first display area based on a detected signal strength between the terminal and the device.

The one or more control units may be configured to select a first set of the plurality of display areas when the device is operating in a first mode and select a second set of the plurality of display areas when the device is operating in a second mode.

The one or more control units may be further configured to: subsequent to causing the selected display areas to display the authenticated information, cause the biometric sensor to capture proximity data indicative of whether the user is proximate the module; obtain proximity information indicating whether, based on the captured proximity data, the user is proximate the module; and in response to the proximity information indicating that the user is not proximate the module, cause the selected display areas to cease displaying the authenticated information.

A third aspect provides a device for contactless or contact communication with a terminal, the device comprising: an embedded chip configured to generate data for communication to the terminal to perform a first function associated with the device; a module comprising: a biometric sensor; and one or more display screens; and one or more control units forming part of the embedded chip and/or the module, the one or more control units configured to: cause the biometric sensor to capture biometric data of a user which can be used to biometrically authenticate the user; obtain biometric authentication information indicating whether the user was biometrically authenticated based on the captured biometric data; and in response to the biometric authentication information indicating that the user was biometrically authenticated, select one or more categories of authenticated information from a plurality of categories of authenticated information based on one or more detected conditions, and cause the one or more display screens to display the one or more selected categories of authenticated information.

The device may further comprise one or more storage elements for storage of the one or more selected categories of authenticated information and the one or more control units may be further configured to, after determining that the one or more display screens have ceased displaying the one or more selected categories of authenticated information, cause the one or more selected categories of authenticated information to be removed from the one or more storage elements.

The device may be a smart card.

A fourth aspect provides a device for contactless or contact communication with a terminal, the device comprising: an embedded chip configured to generate data for communication to the terminal to perform a first function associated with the device; a module comprising: a biometric sensor; and one or more display screens; and one or more control units forming part of the embedded chip and/or the module, the one or more control units configured to: cause the biometric sensor to capture biometric data of a user which can be used to biometrically authenticate the user; obtain biometric authentication information indicating whether the user was biometrically authenticated based on the captured biometric data; in response to the biometric authentication information indicating that the user was biometrically authenticated, select one or more of the plurality of display areas based on one or more detected conditions, and display authenticated information on the one or more selected display areas; and subsequent to causing the selected display areas to display authenticated information, determine whether the module is currently receiving power from an external power source and in response to determining that the module is not currently receiving power from an external power source, cause the selected display areas to cease displaying the authenticated information.

The device may further comprise one or more storage elements for storage of the authenticated information and the one or more control units may be further configured to, after determining that the selected display areas have ceased displaying the authenticated information, cause the authenticated information to be removed from the one or more storage elements.

The device may be a smart card.

A fifth aspect provides a biometric module configured to perform processing as part of a device configured to perform contactless or contact communication with a terminal, the module comprising: a biometric sensor; a display screen; and a control unit configured to: cause the biometric sensor to capture biometric data of a user which can be used to biometrically authenticate the user; obtain biometric authentication information indicating whether the user was biometrically authenticated based on the captured biometric data; and in response to the biometric authentication information indicating the user was biometrically authenticated, cause the display screen to display authenticated information.

The biometric module may be powered by a removable external power source.

The control unit may be further configured to, subsequent to causing the display screen to display authenticated information, determine whether the biometric module is currently receiving power from the external power source and in response to determining the biometric module is not currently receiving power from an external power source, cause the display screen to cease displaying the authenticated information.

The biometric module may further comprise one or more charging elements for storing charge, the one or more charging elements being arranged to be charged when the biometric module is receiving power from an external power source.

The one or more charging elements may comprise one or more capacitors.

The control unit may be further configured to only cause the display screen to display authenticated information if the charge stored by the one or more charging elements exceeds a threshold.

The threshold may be set such that the one or more charging elements hold sufficient charge to cause the display screen to display a different image when the module is not receiving power from the external power source.

The biometric module may further comprise a threshold detecting circuit for detecting whether the charge stored by the one or more charging elements exceeds the threshold.

The threshold detecting circuit may be a brown-out detection circuit.

The control unit may be configured to use the energy stored in the one or more charging elements to cause the display screen to cease displaying the authenticated information.

The control unit may be configured to cause the display screen to cease displaying the authenticated information by blanking the display screen.

The control unit may be further configured to: subsequent to causing the display screen to display authenticated information, cause the biometric sensor to capture proximity data indicative of whether the user is proximate the biometric module; obtain proximity information indicating whether, based on the captured proximity data whether the user is proximate the biometric module; and in response to the proximity information indicating that the user is not proximate the biometric module, cause the display screen to cease displaying the authenticated information.

The biometric sensor may be a fingerprint sensor and the proximity data may comprise data indicative of whether a user's finger is currently in contact with the fingerprint sensor.

The control unit may be further configured to determine whether the user is proximate the biometric module based on the proximity data captured by the biometric sensor.

The control unit may be further configured to perform at least a portion of the biometric authentication of the user based on the biometric data captured by the biometric sensor.

The control unit may be configured to receive the biometric authentication information from an external component that performs the biometric authentication of the user based on the biometric data captured by the biometric sensor.

A sixth aspect provides a device for contactless or contact communication with a terminal, the device comprising: an embedded chip configured to generate data for communication to the terminal to perform a first function associated with the device; and a biometric module comprising: a biometric sensor; a display screen; and a control unit configured to: cause the biometric sensor to capture biometric data of a user which can be used to biometrically authenticate the user; obtain information indicating whether the user was biometrically authenticated based on the captured biometric data; and in response to the information indicating the user was biometrically authenticated, cause the display screen to display authenticated information.

The device may be a smart card.

The authenticated information may comprise information to perform the first function associated with the device.

The device may further comprise an antenna for receiving a wireless signal emitted by the terminal.

There may be provided computer program code for performing a method as described herein. There may be provided non-transitory computer readable storage medium having stored thereon computer readable instructions that, when executed at a computer system, cause the computer system to perform the methods as described herein.

The above features may be combined as appropriate, as would be apparent to a skilled person, and may be combined with any of the aspects of the examples described herein.

### BRIEF DESCRIPTION OF THE DRAWINGS

Examples will now be described in detail with reference to the accompanying drawings in which:
FIG. 1 is a block diagram of a first example device comprising a biometric module wherein the device is capable of contactless and/or contact communication with a terminal;
FIG. 2 is a block diagram of a first example implementation of the biometric module of FIG. 1;
FIG. 3 is a schematic diagram of an example of a charging element in conjunction with a detection circuit;
FIG. 4 is a flow diagram of an example method of operating the biometric module of FIG. 1 when the device is in communication with a terminal;
FIG. 5 is a timing diagram illustrating an example operation of the chip and the biometric module of FIG. 1;
FIG. 6 is a flow diagram of an example method of operating the biometric module of FIG. 1 when the device is not in communication with a terminal;
FIG. 7 is a block diagram of a second example implementation of the biometric module of FIG. 2;
FIG. 8 is a block diagram of a third example implementation of the biometric module of FIG. 2;
FIG. 9 is a schematic diagram of an example smart card with a combined biometric sensor/display module;
FIG. 10 is a schematic diagram of a first example smart card with a display screen with multiple display areas;
FIG. 11 is a schematic diagram illustrating an example use of the multiple display areas when the smart card of FIG. 10 is operating in contact mode;
FIG. 12 is a schematic diagram illustrating an example use of the multiple display areas when the smart card of FIG. 10 is operating in contactless mode;
FIG. 13 is a schematic diagram illustrating an example use of the multiple display areas when the smart card of FIG. 10 is operating in non-terminal transaction mode;
FIG. 14 is a schematic diagram illustrating an example use of the multiple display areas when the smart card of FIG. 10 is operating in non-terminal enrolment mode;
FIG. 15 is a schematic diagram illustrating a second example smart card with a display screen with multiple display areas and use thereof when the smart card is operating in non-terminal enrolment mode;
FIG. 16 is a schematic diagram illustrating a third example smart card with a display screen with multiple display areas and use thereof when the smart card is operating in non-terminal enrolment mode; and
FIG. 17 is a block diagram of a second example device comprising a biometric module wherein the device is capable of contactless and/or contact communication with a terminal.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art without deviating from the subject-matter as claimed.

Smart cards are increasingly incorporating additional components to increase security and/or to improve the user's experience of using the smart card. For example, biometric sensors, such as fingerprint sensors, are being incorporated into smart cards in order to provide user identity verification or authentication. Likewise, some smart cards feature a display screen which may be used for a variety of purposes, e.g. to display information associated with the card account or the card holder, to provide information during use of the card (e.g. transaction status, transaction amount, instructions to the user) and for decoration and branding (e.g. to highlight a logo, to personalise the card, etc.) A common use for a display screen on a bank card is to display the card verification value (CVV), or a dynamic CVV (dCVV) (i.e. a CVV that periodically changes).

However, the inventors have identified that the security of a smart card can be further increased by incorporating both a biometric sensor for use in biometrically authenticating a user and a display screen wherein the display screen is controlled, or gated, based on the biometric authentication of the user. Specifically, such a configuration can be used to ensure that authenticated or sensitive information is only displayed to an authenticated user (e.g. the card holder).

Accordingly, described herein are devices (e.g. smart cards) for contactless and/or contact communication with a terminal (e.g. a card reader) that comprise an embedded chip configured to generate data for communication to the terminal to perform a first function associated with the device; and a biometric module that comprises a biometric sensor, a display screen, and a control unit configured to cause the biometric sensor to capture biometric data of a user which can be used to biometrically authenticate the user; and in response to the user being biometrically authenticated based on the captured biometric data, cause the display screen to display authenticated information. As described in more detail below, in some cases, the control unit may be further configured to, subsequent to causing the display screen to display authenticated information, control the biometric sensor to obtain proximity data which can be used to determine whether the user is proximate the biometric module, and in response to the proximity data indicating that the user is no longer proximate the biometric module cause the display screen to cease displaying the authenticated information.

Ceasing display of authenticated information can improve security, i.e. removing authenticated information from view as soon as possible helps to prevent third parties from seeing information that the user would not want them to see. Furthermore, turning off display of certain information (authenticated or non-authenticated) when it is no longer needed may simplify the user experience by decluttering the display and/or highlighting the information which remains on display. Controlling when information is turned on/off may also inform the user, for example it may imply a change of status. In the case of contactless cards where power must be harvested and therefore is limited, ceasing display of authenticated or non-authenticated information, as soon as it no longer required or is useful, is an important way of saving power.

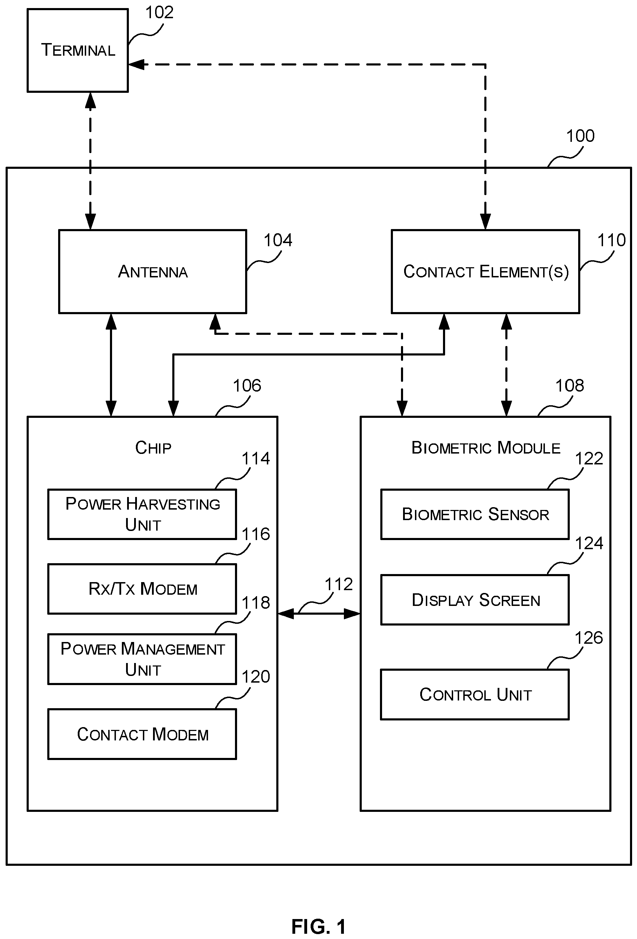

Reference is now made to FIG. 1 which illustrates an example device 100 capable of communicating with a terminal 102 via a contact and/or contactless interface to perform a first function.

The device 100 and the terminal 102 may take one of many form factors. The device 100 may be, for example, a smart card an ID card, a passport, a fob, a dongle, a security token (e.g. a USB token) etc. Alternatively, the device 100 may be integrated in a communication device such as a mobile phone or smartphone; a wearable device, such as a bracelet, watch, a glove/pair of gloves, a pin (e.g. a brooch), a badge or some other contactless wearable device. The terminal 102 may be, for example, a card reader, such as a point-of-sale (POS) terminal, a cash register, an ATM machine, a computer, a smartphone etc. In some examples, the device may be a proximity integrated circuit card (PICC) and the terminal may be a proximity coupling device (PCD).

The device 100 comprises an antenna 104, a chip 106, a biometric module 108 and one or more contact elements 110. The chip 106 is embedded within the device 100 and may be, for example, a Secure Element. The biometric module 108 may also be embedded within the device 100. In this example the biometric module 108 is a physically distinct component from the chip 106. Each of the chip 106 and the biometric module 108 may be implemented on one or more respective integrated circuit chips embedded in the device 100. The biometric module 108 and chip 106 are connected to each other by one or more links, shown generally at 112. One or more of the links 112 may be a bus. In other examples the biometric module 108 and the chip 106 may be physically connected, but logically separate entities.

The device 100 communicates with the terminal 102 (e.g. transmits message to and/or receives messages from the terminal) through the antenna 104 when the device 100 is operating in contactless mode, and through the contact element(s) 110 when operating in contact mode. Although a single contact element 110 is shown in FIG. 1 in other examples there may be a plurality of contact elements.

The contact element(s) 110 is/are connected to the chip 106 by any suitable means, such as, but not limited to, one or more conductive links or elements. The contact element(s) 110 allow the device 100 to communicate with, and receive power from, the terminal 102 when the contact element(s) 110 are in suitable physical contact with corresponding elements of the terminal 102. Accordingly, when the device 100 is operating in contact mode the chip 106 receives power from the terminal 102 via the contact element(s) 110. In some cases, the device 100 may communicate with the terminal 102 in accordance with the ISO7816 standard when operating in contact mode.

In the example shown in FIG. 1 the contact element(s) 110 are also connected to the biometric module 108 so that the biometric module 108 can also receive power from the contact element(s) 110. However, in other examples, the contact element(s) 110 may only be connected to the chip 106 such that the chip 106 receives power from the terminal 102 when operating in contact mode and manages the received power to power its internal components and supply power to the biometric module 108.

Similarly, the antenna 104 is connected to the chip 106 by any suitable means, such as, but not limited to, one or more conductive links or elements. The antenna 104 allows the device 100 to wirelessly communicate with, and harvest power from, the terminal 102 when the device 100 is within suitable proximity, or range, of the terminal 102. Specifically, the chip 106 comprises a power harvesting unit 114, a transceiver modem 116, a power management unit 118 and a contact modem 120. In some cases the antenna 104 may also be connected to the biometric module 108 by, for example, physical links, such as, but not limited to conductive links or elements. In these cases, the biometric module 108 comprises its own power harvesting unit to harvest power from the received wireless signal. However, in other cases, the antenna 104 may only be connected to the chip 106 and the chip 106 may be configured to distribute the power harvested from the received wireless signal to the chip 106 and the biometric module 108.

The power harvesting unit 114 is configured to harvest power from a wireless signal emitted by the terminal 102 which is received by the antenna 104 when the device 100 is operating in contactless mode. The power harvesting unit 114 may, for example, induce a voltage from the received signal emitted by the terminal 102. That induced voltage can be supplied to other components of the chip 106 and the biometric module 108. The wireless signal emitted from the terminal 102 may be a radio frequency (RF) signal governed by a radio communications standard. In one example, the wireless signal may be a near field communication (NFC) signal.

The transceiver modem 116 is configured to manage the transmission of messages to, and reception of messages from, the terminal 102 when the device 100 is operating in contactless mode. Specifically, the terminal 102 may be configured to transfer data to the device 100 by modulating (e.g. amplitude modulating) a carrier signal with the data it wishes to transfer. In these cases the modem 116 may be configured to extract the data from the received wireless signal by demodulating (e.g. demodulating the amplitude of) the received signal.

Similarly, the modem 116 may be configured to transfer messages to the terminal by modulating data generated by the chip 106 onto the wireless signal emitted from the terminal. In some cases, the modem 116 may be configured to modulate the received signal by applying a modulated load to the antenna 104. Modulating the antenna load at the device varies the power drawn from the received signal in accordance with the modulation. The variations in the drawn power can be detected by the terminal 102 and interpreted as data.

The power management unit (PMU) 118 is configured to manage, or control, the use of power (either harvested by the power harvesting unit 114 in contactless mode or supplied through the contact element(s) 110 in contact mode) by the chip 106. The PMU 118 may control the power consumed by the other components of the chip 106 to perform their tasks. In cases in which the biometric module 108 is not connected to the antenna 104 or contact element(s) 110, the PMU may also control the supply of power received from, or harvested from, the terminal 102 to the biometric module 108.

The chip 106 further comprises a contact modem 120 that manages the transmission of messages to, and the receipt of messages from, the terminal 102 when operating in contact mode. The contact modem 120 may be configured to ensure the communications between the chip 106 and terminal 102 satisfy any relevant standards (e.g. the ISO7816 standard) when the device 100 is operating in contact mode.

The biometric module 108 is configured to capture biometric data of a user for use in biometrically authenticating the user; and if the user is biometrically authenticated, display authenticated information to the user. The biometric module 108 is a unit that comprises one or more components that together perform the functions of obtaining biometric data and displaying information to the user based on biometric authentication performed on that biometric data. The components that form the biometric module may be implemented on, or by, a singled integrated circuit chip or two or more of the components that form the biometric module may be implemented on, or by, different integrated circuit chips.

The biometric module 108 comprises a biometric sensor 122, a display screen 124 and a control unit 126. The biometric sensor 122 is configured to capture biometric data of a user which can be used to biometrically identify or authenticate the user. The biometric authentication based on the biometric data obtained from the biometric sensor 122 may be performed by the biometric module 108, the chip 106, or the biometric module 108 and the chip 106. Example biometric identifications that may be performed by the biometric module 108 and/or the chip 106 include, but are not limited to: fingerprint recognition; iris recognition; vein recognition; retina recognition; voice recognition; behavioural recognition; facial recognition etc. In some cases, the biometric authentication may be performed as part of or in conjunction with the first function. For example, in some cases the biometric authentication and subsequent display of authenticated information may be performed in response to a request to perform biometric authentication from the chip 106.

The display screen 124 is configured to display information and specifically authenticated information. In some cases, the display screen 124 may be a touch-screen display to allow the user to provide a control input such as a press, tap or gesture, or to provide a data input, such as to input a character or instructions or to scroll through or navigate information. While in the example of FIG. 1 the biometric module 108 comprises a single display screen 124, in other examples the biometric module 108 may comprise a plurality of display screens each of which may be controlled by the control unit 126 (or another control unit) in the same manner as the display screen 124. One or more of the display screens may comprise a plurality of display areas which can be individually controlled by the control unit 126 (or another control unit). Where the device 100 comprises one or more sides or faces, the display screen(s) may be configured to display information (e.g. authenticated information) on any combination of the faces or sides. For example, where the device 100 comprises a front face and a back face, the display screen(s) may be configured to display information on the front face, the back face or both the front and back faces.

The term "authenticated information" is used herein to mean information that is only to be displayed to an authenticated user (e.g. a user authenticated by the biometric data captured by the biometric sensor 122). Authenticated information may alternatively be referred to herein as private information, secure information or authorized information. In some cases, the authenticated information may be information for use in conjunction with the first function. For example, where the first function is a type of banking functionality, such as the performance of a financial transaction (e.g. a credit card transaction), the authenticated information may include one or more of: a card validation value (CVV)/card validation code (CVC) or a dynamic card validation value (dCVV)/dynamic card validation code (dCVC); the card holder's name; at least a portion of the credit card number; and the credit card's expiry date. Although some of this information is currently displayed on credit cards with or without a display screen and thus is available to any user of the card (authenticated or not) the security of the card could be further improved by making that information only available to an authenticated user. In particular, if this information is only displayed to an authenticated user then it may make it difficult, if not impossible, for a non-authenticated person to complete a transaction using the device 100. Specifically, some salesclerks may require a user to supply one or more of these pieces of information to complete a transaction. For example, a salesclerk may ask the user of a credit card to provide the last four digits of the credit card to validate the credit card and ensure the credit card is not a fake card. In the embodiments described herein only the card holder will be able to verify that information.

It will be evident to person of skill in the art that these are examples only of authenticated information and that in other examples there may be other authenticated information. What is designated as authenticated information may be determined by the issuer of the device 100 based on, for example, the function of the device 100. For example, where the first function is permitting access to a physical location the authenticated information may include a code which the user has to input to an input device to gain access to the physical location. In some cases, the authenticated information may be generated by the chip 106 as part of the first function and provided to the biometric module 108. In other examples, the authenticated information may be generated by the biometric module 108 or another component of the biometric module 200.

In some cases, the display screen 124 may also display non-authenticated information. The term "non-authenticated information" is used herein to mean information that could be displayed to anyone, regardless of whether they are the authenticated user of the device, without risk. Non-authenticated information may alternatively be referred to herein as public information, non-secure information or unauthorized information. In some cases, the non-authenticated information may be information for use in conjunction with the first function. For example, where the first function is a type of banking functionality, such as the performance of financial transaction (e.g. a credit card transaction) the non-authenticated information may include one or more of: the card-issuer's name, the card service provider's name, logos, decoration on the device, advertisements, instructions or information to the user, status information such as the strength of the contactless field, whether the biometric authentication has been successful or not and so on. If this non-authenticated information is displayed to a non-authenticated person, it does not permit them to perform the first function.

It will be evident to person of skill in the art that these are examples only of non-authenticated information and that in other examples there may be other non-authenticated information. In some cases, the non-authenticated information may be generated by the chip 106 as part of the first function and provided to the biometric module 108. In other examples, the non-authenticated information may be generated by the biometric module 108 or another component of the device 100.

The control unit 126 is configured to, in response to a user being biometrically authenticated based on biometric data captured by the biometric sensor 122, display authenticated information to the user on the display screen 124. This ensures that the authenticated information is only displayed to an authenticated user. When displaying authenticated information, the control unit 126 may additionally display non-authenticated information to the authenticated user. For example, the display may show the CVV number (i.e. authenticated information) at the same time as displaying the card issuer's logo (i.e. non-authenticated information). As described in more detail below, in some cases the control unit 126 may only enable (e.g. power) the display screen 124 once a user has been authenticated so that the display screen 124 does not display any information unless the user is authenticated. In other cases, the control unit 126 may enable the display screen 124 even if the user has not been biometrically authenticated, but, if the user has not been biometrically authenticated only allow non-authenticated information to be displayed on the display screen 124. Where the device 100 and/or the biometric module 108 comprises multiple display screens 124, each display screen 124 may have its own control unit 126 and/or a single control unit 126 may be configured to control more than one display screen 124. Where a display screen 124 comprises multiple display areas which may be individually controlled, the control unit 126 for that display screen 124 may be configured to control each display area thereof.

It will be evident to a person of skill in the art that this is only an example of a device that can communicate with a terminal and in other examples the device may not comprise the contact element(s) and contact modem such that the device is only able to operate in contactless mode or the device may not comprise the antenna, power harvesting unit and transceiver modem such that the device is only able to operate in contact mode.

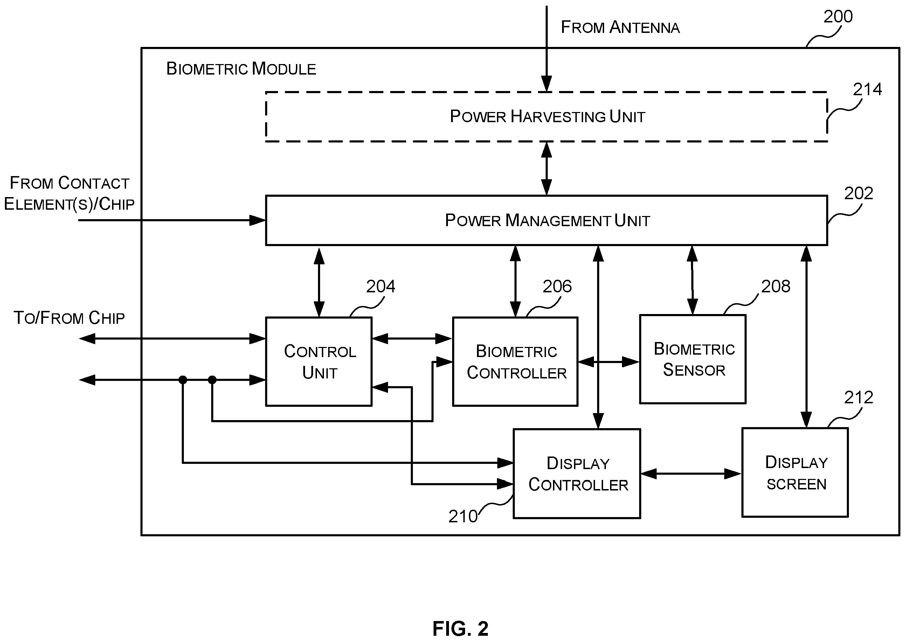

Reference is now made to FIG. 2 which illustrates a first example biometric module 200 which can be used to implement the biometric module 108 of FIG. 1. The biometric module 200 is configured to capture biometric data for use in biometrically identifying or authenticating a user of the device 100 and to display authenticated information to a biometrically authenticated user. As noted above, the authenticated information may be information for use in performing the first function (e.g. information for use in performing a financial transaction). The biometric module 200 comprises a power management unit 202, a control unit 204, a biometric controller 206, a biometric sensor 208, a display controller 210 and a display screen 212. In some cases (e.g. when the device 100 adopts an architecture in which both the chip 106 and the biometric module 108 are connected to the antenna 104) the biometric module 200 may also comprise a power harvesting unit 214. The components of the biometric module 200 may be interconnected via any suitable means (e.g. via individual communication links or via a bus that is common to one or more of the components). In some cases, all of the components of the biometric module (e.g. the power management unit 202, control unit 204, biometric controller 206, biometric sensor 208, display controller 210, display screen 212, and optional power harvesting unit 214) may be implemented on, or by, a singled integrated circuit chip. However, in other cases, at least two of the components of the biometric module may be implemented on, or by, different integrated circuit chips. For example, in some cases, the display controller and the display screen may be implemented on a separate integrated circuit chip from the remaining components.

In the examples described herein the biometric module 200 does not have its own power source or supply, such as a battery, and relies on power received from the contact element(s) 110 when the device 100 is operating in contact mode or the antenna 104 when the device 100 is operating in contactless mode, which may be received directly from the contact element(s) 110 or the antenna 104 respectively, or via the chip 106. However, in other examples the biometric module may comprise an internal or on-board power source (e.g. battery). Accordingly, the power management unit 202 may receive power from: the contact element(s) when the device 100 is operating in contact mode, the power harvesting unit 214 (if the biometric module 200 has one) when the device 100 is operating in contactless mode, and/or from the chip 106 and manages or controls the distribution of power to the components of the biometric module 200. In some cases, when the device 100 is operating in contactless mode the power management unit 202 receives a rectified voltage from power harvested by the power harvesting unit 214.

The power management unit 202 may be physically interconnected to each of the control unit 204, the biometric controller 206, the biometric sensor 208, the display controller 210 and the display screen 212. This allows the power management unit 202 to control the power supplied to each of these components separately. The inclusion of the power management unit 202 within the biometric module 200 also enables the biometric module 200 to control the power consumption of each of its internal components independent of the chip 106.

The biometric sensor 208 is configured to capture biometric data of a user which can be used to identify or authenticate the user. In some examples, the biometric sensor 208 may capture the biometric data by capturing images of a biometric source. The biometric sensor 208 may be, for example, a fingerprint sensor (a single or double-sided sensor), a retina sensor, an iris sensor, a vein sensor, a facial sensor, or a voice/audio sensor etc.

The biometric controller 206 is configured to control the operation of the biometric sensor 208. The biometric controller 206 may, for example, be configured to instruct the biometric sensor to enter acquisition mode in which the sensor captures biometric data (e.g. a fingerprint pattern, retina pattern, iris pattern etc.). The biometric controller 206 may receive any data captured by the biometric sensor 208 and provide the captured data to the control unit 204. In some cases, the biometric controller 206 may be able to transition the biometric sensor 208 between multiple states including an acquisition state and a low power state. In some cases the biometric controller 206 may be implemented by an application-specific integrated circuit (ASIC).

The display screen 212 is any suitable electronic display screen which can display an image and/or information in response to electrical energy. As the power to operate the display screen 212 may be limited, particularly when operating in contactless mode, the display screen 212 may be capable of displaying information with a limited amount of power. In some cases the display screen may cover all or a portion of a surface, face or side of the device 100. For example, where the device 100 is a card (e.g. a smart card) the display screen 212 may cover all or a portion of a face or side (e.g. front or back face) of the card. Although FIG. 2 shows a biometric module 200 with a single display screen, in other examples the biometric module 200 may comprises multiple display screens which may be individually controlled to display authenticated and/or non-authenticated information in the same manner as the display screen 212 of FIG. 2. A single display screen 212 may comprise multiple display areas which may be individually controlled to display authenticated and/or non-authenticated information in the same manner as the display screen 212 of FIG. 2.

In some examples, the display screen 212 may be a liquid crystal display (LCD) display. As is known to those of skill in the art, an LCD display uses liquid crystals to switch pixels on and off to reveal a specific colour. In other examples, the display screen 212 may be an organic light-emitting diode (OLED) display. As is known to those of skill in the art OLED is a flat light emitting technology, made by placing a series of organic thin films between two conductors. When electrical current is applied, a bright light is emitted. An OLED display typically consumes less power than a similarly sized LCD display, but is currently more expensive.

In yet other examples, the display screen 212 may be a microLED display. As is known to those of skill in the art, microLED takes traditional self-emanating LEDs (as opposed to OLEDs) and shrinks them down to the microscopic level. This allows microLEDs to produce an image quality similar to OLED without having to use an organic substrate. One of the other benefits of microLED technology is that the location of the display screen can be hidden unless it is activated or displaying information.

In yet other examples, the display screen 212 may be an electronic paper display (EPD) display. As is known to those of skill in the art, in contrast to other display technologies such as OLED, LCD and microLED which use backlighting to illuminate pixels, an EPD uses the scientific phenomenon called electrophoresis, which refers to the motion of electrically-charged molecules within an electric field. EPD does not require electricity to sustain an image, it only needs power to change the displayed image. EPD displays are particularly well suited for use in a smart card because they can be made from flexible electronics (and thus can flex with the card during use), they are robust enough to withstand daily use, they are visible in a variety of different light conditions and they consume a small amount of power relative to other display technologies. It will be evident to a person of skill in the art that these are examples only and that the display screen 212 may be implemented by any suitable display technology.

In some cases, the display screen 212 may be a touch-screen display to allow the user to provide a control input such as a press, tap or gesture, or to provide a data input, such as to input a character or instructions or to scroll through or navigate information.

The display controller 210 is configured to control the operation of the display screen 212. Specifically, the display controller 210 may, for example, be configured to control the display screen 212 to cause it to display certain information (e.g. authenticated information and/or non-authenticated information). For example, where the display screen 212 is formed of a grid of pixels, the display controller 210 may be configured to activate certain pixels to display an image which conveys information to the user. Where the biometric module comprises multiple display screens 212, each display screen 212 may have its own display controller 210 for controlling the operation thereof and/or a display controller 210 may be configured to control more than one display screen 212. Where a display screen 212 comprises multiple display areas which may be individually controlled, the display controller 210 may control each display area.

In some cases, the information that is displayed on the display screen 212 may be generated by the control unit 204 and/or the chip 106. In some cases, authenticated information to be displayed on the display screen 212 (e.g. CVV or dCVV) may be generated by the chip 106 and any non-authenticated information to be displayed on the display screen 212 may be generated by the control unit 204. In some cases, the display controller 210 may be implemented by an ASIC.

The control unit 204 is configured to control the other components of the biometric module 200 (e.g. the biometric controller 206, the biometric sensor 208, the display controller 210 and the display screen 212) to capture biometric data of a user for use in biometrically authenticating the user and to display authenticated information to the user if they are biometrically authenticated. Specifically, the control unit 204 may be configured to: (i) control the operation of the biometric sensor 208 via the biometric controller 206 to obtain biometric data of a user which can be used to perform biometric authentication; (ii) perform biometric matching to compare the biometric data captured by the biometric sensor 208 to stored template data to determine if the user is biometrically identified or authenticated; and (iii) control the operation of the display screen 212 via the display controller 210 based on whether or not the user has been biometrically authenticated. In some cases, the control unit 204 may be implemented as a micro controller unit (MCU). The biometric module 200 may comprise a plurality of control units and the tasks of the control unit 204 may be distributed amongst the plurality of control units.

In some cases, the control unit 204 may be configured to cause (via the biometric controller 206) the biometric sensor 208 to capture biometric data of a user for use in biometrically authenticating the user in response to receiving a request from the chip 106 to perform biometric authentication and/or in response to determining (e.g. from information received from the power management unit 202) that the biometric module 200 has received enough power to be enabled.

The control unit 204 may be configured to perform the biometric matching in any suitable manner. For example, if the biometric data captured by the biometric sensor 208 is an image, the control unit 204 may perform image matching to compare an image captured by the biometric sensor 208 to one or more stored template images. A template image is a trusted image. An image may be trusted in the sense it is taken to be of a biometric source belonging to the user of the device 100. To perform the image matching, the control unit 204 may perform feature extraction on the captured image to identify a set of one or more extracted features. The extracted features are then compared with the features of the template image(s) to determine if the captured image matches the template image. The control unit 204 may, for example, compare the features of the images to determine a matcher score for the captured image. The captured image may be considered to match the template image(s) if the matcher score is above a predetermined threshold.

The control unit 204 may communicate an indication that the user has been biometrically authenticated to the chip 106. The chip 106 may then communicate an indication that the user of the device 100 has been authenticated back to the terminal 102. The authentication of the card user may enable the primary function associated with the device 100 to be completed. Alternatively, the control unit 204 may communicate to the chip 106 that the user was not successfully authenticated, in which the primary function associated with the device 100 may not proceed, or may proceed in an altered fashion.

In an alternative example, the biometric matching may be performed by the chip 106, rather than by the biometric module 200. Specifically, the biometric data captured by the biometric sensor 208 may be transmitted to the chip 106 and then the chip 106 performs the biometric matching. In a further alternative example, the biometric matching may be performed by the chip 106 in conjunction with the biometric module 200. Specifically, a portion of the biometric matching based on the biometric data captured by the biometric sensor 208 may be performed by the chip 106 and another portion of the biometric matching based on the biometric data captured by the biometric sensor 208 may be performed by the biometric module 200. Thus, in these two examples the biometric authentication is performed by both the chip 106 and the biometric module 200.

In each of these examples the control unit 204 is said to obtain biometric authentication information that indicates whether or not the user was biometrically authenticated based on the biometric data captured by the sensor. Depending on which component, or components, perform the biometric matching the control unit 204 may obtain the biometric authentication information as part of performing the biometric matching, or the control unit 204 may receive the biometric authentication information from an external component, such as the chip 106, which performs all or a portion of the biometric matching.

The control unit 204 is also configured to control the operation of the display screen 212 (e.g. via the display controller 210) based on whether the user has been biometrically authenticated or not (e.g. based on the biometric authentication information). Specifically, the control unit 204 may be configured to only allow authenticated information to be displayed on the display screen 212 if the user has been biometrically identified, or authenticated, based on the biometric data captured by the biometric sensor 208. This ensures that authenticated or secure information is only displayed to an authenticated user. In some cases, the control unit 204 may be configured to only enable or provide power to the display screen 212 if the user has been biometrically authenticated. In other cases, the control unit 204 may be configured to enable or power the display screen 212 even if the user is not successfully biometrically authenticated or identified, but only display non-authenticated information. For example, in some cases, if the user was not successfully authenticated or identified by the biometric data captured by the biometric sensor 208 a message or other indicator may be displayed on the display screen 212 to indicate that the user was not successfully identified.

In some cases, once the user has been biometrically authenticated, the authenticated information that is displayed on the display screen 212 may be selected based on one or more detected conditions, such as, but not limited to the operating mode of the device 100. For example, in some cases, the authenticated information may be divided into a plurality of categories or groups and, once the user has been biometrically authenticated, the control unit 204 and/or the display controller 210 may be configured to select one or more of the categories or groups of authenticated information to be displayed on the display screen 212 based on one or more detected conditions. For example, the control unit 204 and/or the display controller 210 may be configured to select a first set of groups or categories of authenticated information to be displayed on the display screen 212 if the device 100 is operating in a first mode and select a second, different, set of groups or categories of authenticated information to be displayed on the display screen 212 if the device 100 is operating in a second, different, mode. Each set of categories may comprise one or more categories. Certain authenticated information may exist in multiple categories, i.e. the categories of authenticated information need not be mutually exclusive.

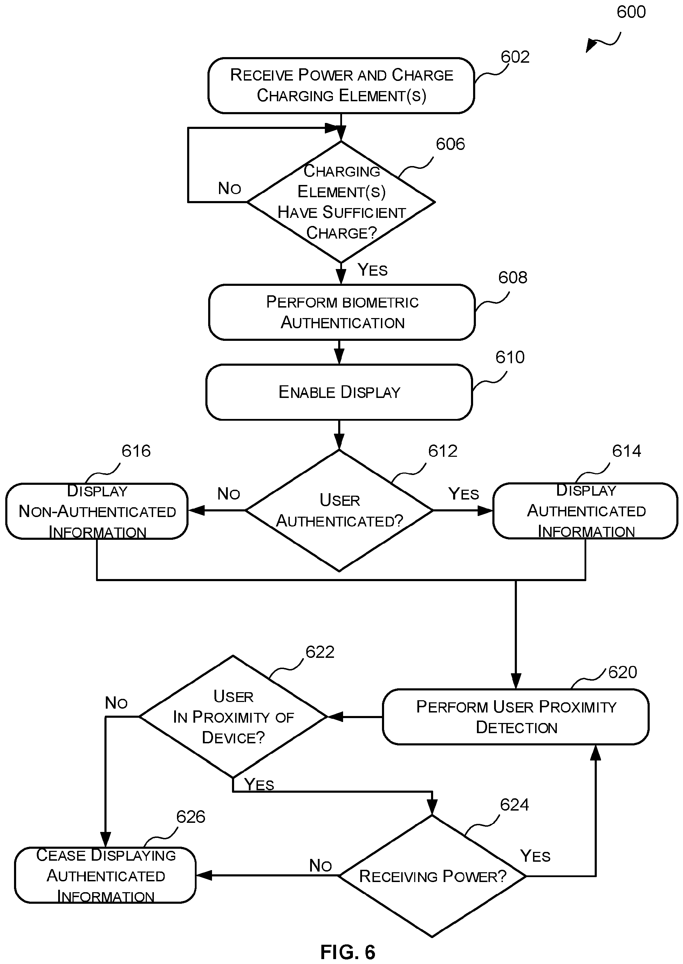

As described above, in some cases the device 100 may be operable in contact mode or contactless mode. In both of these modes the device 100 is in communication with a terminal 102 (via the contact element(s) or the antenna). Accordingly, these modes of operation are referred herein as terminal modes of operation. As described in more detail below with respect to FIG. 6, the device 100 may also be operable in a non-terminal mode where the device is not in contact or contactless communication with a terminal (e.g. it is not receiving power from the terminal), but is receiving power from an external device or an on-board battery. In these examples, the authenticated information may be divided into a first group or category of authenticated information which is displayed on the display screen 212 when the device 100 is operating in a terminal mode (e.g. contact mode or contactless mode); a second group or category of authenticated information which is displayed on the display screen 212 when the device 100 is operating in a non-terminal mode; and a third group or category of authenticated information which is displayed on the display screen 212 when the device is operating in either a terminal mode or a non-terminal mode. Accordingly, in this example, when the device 100 is device is operating in a terminal mode both the first and third categories of authenticated information is displayed; and when the device 100 is operating in a non-terminal mode both the second and third categories of authenticated information is displayed on the display screen 212.

When the first function is a type of banking function, such as the performance of financial transaction (e.g. a credit card transaction) the first group or category of authenticated information may include one or more of CVV, DCVV and account/credit card number; the second group or category of authenticated information may include one or more of the merchant name, the amount of the transaction and the card/account balance; and the third group or category of authenticated information may include one or more of the card holder's name, all or a portion of the card/account number, the card/account expiry date, card/account start date, sort code and credit limit.

The mode of operation of the device 100 is only an example of a detectable condition which may be used to select the authenticated information to display on the display screen 212, and in other examples other detectable conditions may be used to select the appropriate authenticated information to display on the display screen 212. Other examples of detectable conditions which may be used to select the authenticated information to be displayed on the display screen 212 include, but are not limited to: (1) the location of the device 100; (2) user configured privacy settings; (3) the quality of the biometric authentication; and (4) the number of previous failed biometric authentication attempts. For example, based on the location of the device 100 it may be determined that it is safe or not to display certain authenticated information; the user may be able to configure privacy settings which govern which information is to be displayed when the user is authenticated; certain authenticated information may only be displayed if the biometric match is above a certain threshold; and/or a limited amount of authenticated information may be displayed if the number of failed biometric matches preceding a successful biometric authentication exceeds a threshold.

Similarly, in some cases, the non-authenticated information that may be displayed on the display screen 212 may be divided into a plurality of groups or categories and the control unit 204 and/or the display controller 210 may be configured to select one or more of the non-authenticated groups or categories to display on the display screen 212 based on one or more detected conditions. The detectable conditions that may be used to select which group(s) of non-authenticated information is/are to be displayed on the display screen 212 may include, but are not limited to, one of the following: the operating mode of the device 100 (e.g. terminal mode or non-terminal mode); whether or not this is the first time the device 100 is being used (e.g. certain user instructions may be displayed the first time the device 100 is being used but not when the device is subsequently used); user preference settings (e.g. whether advertisements are shown); and the location of the device 100 (e.g. the display may show promotional offers relevant to the location, etc.). Certain non-authenticated information may exist in multiple categories, i.e. the categories of non-authenticated information need not be mutually exclusive.

In some cases, in addition to the biometric sensor 208 being able to capture biometric data of a user which can be used to biometrically identify, or authenticate, the user, the biometric sensor 208 may also be able to capture proximity data which can be used to determine whether the user is proximate the device 100 (e.g. whether the user is in contact with the device 100). For example, where the biometric sensor 208 is a fingerprint sensor, in addition to being able to capture a high resolution image of the user's finger which can be used to biometrically identify, or authenticate, the user, the biometric sensor may be able to capture a lower resolution image of the user's finger (or other object in contact with the biometric sensor 208) which can be used to determine whether the user's finger (or simply a finger) is in contact with or proximate the sensor. It will be evident to a person of skill in the art that this is an example only and that in other examples the biometric sensor may be able to capture different information which can be used to determine whether a user is present. For example, in other cases the biometric sensor may be able to measure the capacitance at one or more points of a surface of the sensor from which it can be determined that a person is touching the sensor. The proximity data captured by the biometric sensor 208 (e.g. lower resolution image) which can be used to determine whether the user is present or proximate may be provided to the control unit 204 (or, alternatively the chip 106) which determines from the captured proximity data whether the user is present.

The process of determining whether a user is present (e.g. capturing the relevant data from the sensor and analyzing the captured data) may be less power consuming than the process of biometrically identifying or authenticating the user. This may be because capturing proximity data may require less power than capturing biometric data and/or because the analysis performed on the captured proximity data is less computation and/or power intensive than the biometric matching process. For example, where the biometric sensor 208 is configured to capture an image of a biometric source the image captured for proximity detection (e.g. the proximity data) may have a lower resolution than the image captured for biometric authentication (e.g. the biometric data) and/or the image processing or filtering performed on the image captured for proximity detection may be less than the image processing or filtering performed on an image captured for biometric authentication. Furthermore, a simpler process may be used to determine from the captured image whether the user is present than the process used to biometrically authenticate a user from a captured image. For example, one or more aspects of the image captured for proximity detection may be simply compared against a threshold instead of using the much more complex biometric matching process. One or more of control unit use, component use, memory access and processing time may be reduced in proximity detection compared to the biometric authentication process.

In these cases, after a user has been biometrically authenticated the biometric module 200 may be configured to periodically capture proximity data from the biometric sensor which can be used to determine whether a user is present or proximate the device and if it is determined that the user is no longer present (e.g. where the biometric sensor is a fingerprint sensor, determining that the user's finger is no longer in contact with the fingerprint sensor) cease the display of authenticated information on the display screen 212. This may provide further protection for the authenticated information by only displaying the authenticated information if the user continues to be present. For example, once the user has been biometrically identified or authenticated from the biometric data captured by the biometric sensor, the control unit 204 may be configured to instruct the biometric controller 206 to periodically cause the biometric sensor 208 to capture proximity data that can be used to determine whether the user is present or proximate the device 100 (e.g. when the biometric sensor is a fingerprint sensor whether the user's finger is on the fingerprint sensor). The proximity data which can be used to determine whether the user is present (i.e. is proximate the device 100) may be provided to the control unit 204 which may determine from the proximity data whether the user is still present. In other cases, an external component, such as the chip 106, may be configured to determine form the proximity data whether the user is still present. In yet other cases control unit 204 in conjunction with an external component, such as the chip 106, may determine from the proximity data whether the user is still present.

In each of these cases the control unit 204 is said to obtain proximity information that indicates whether or not the user is present or proximate the device based on the proximity data captured by the sensor. Depending on which component, or components, perform the proximity detection or presence detection the control unit 204 may obtain the proximity information as part of performing the proximity detection, or the control unit 204 may receive the proximity information from an external component, such as the chip 106, which performs all or a portion of the proximity detection. If it is determined that the user is no longer present (e.g. from the proximity information) the control unit 204 may instruct the display controller 210 to cease displaying authenticated information on the display screen 212.

Some display technologies, such as, but not limited to, OLED and microLED only display information when power is applied thereto, and therefore when power is no longer applied to such displays, they will cease displaying information. Accordingly, where the display screen 212 is implemented using display technology that will cease displaying information when power is no longer applied thereto, the display controller 210 may cause the display screen 212 to cease displaying information (including any authenticated information) by ceasing to provide power thereto.

In contrast, other display technologies, such as, but not limited to, EPD and LCD can continue to display information even when power is not being applied thereto (even for a short time as is the case with LCD). For example, as described above, EPD displays generally only require power to change the image displayed thereon. In other words, EPD displays will generally continue to display the most recent image or information unless power is applied thereto to change the image or clear the display. Accordingly, where the display screen 212 is implemented using display technology that can continue to display information without power being applied thereto, the display controller 210 may cause the display screen 212 to cease displaying authenticated information by actively causing the display screen to no longer display the authenticated information. In some cases this may comprise actively causing the display screen to be cleared (i.e. no longer display any information), which may be referred to herein as blanking the display screen. In other cases, this may comprise actively causing the display screen to display a different image or set of information that does not include the authenticated information.

Once the biometric module 200 is no longer receiving sufficient power to power the biometric module 200 (e.g. because the contact elements 110 are no longer in contact with the corresponding elements of the terminal 102 or because the device 100 is not in sufficient proximity to the terminal 102 to be powered by the wireless signal generated thereby) the biometric module 200 can no longer biometrically identify, or authenticate the user and/or can no longer verify the presence of the user. Therefore, once power is removed from the biometric module 200 it can be considered `not safe' to display authenticated information. Accordingly, in some cases, after the user has been biometrically identified, or authenticated, and the display screen 212 is being used to display authenticated information, the biometric module 200 may be configured to monitor whether the biometric module 200 is receiving sufficient power (e.g. from the terminal 102 via the contact element(s) or the received wireless signal) to power the biometric module 200 and if the biometric module 200 detects that it is no longer receiving sufficient power then the biometric module 200 may be configured to cease displaying authenticated information on the display screen 212.

In some cases, the power management unit 202 (or another component of the biometric module 200) may be configured to monitor the power received from the terminal (e.g. via the antenna or the contact elements) and if the power management unit 202 determines that the power received has fallen below a certain threshold, the power management unit 202 may be configured to notify the control unit 204 that the biometric module 200 is not receiving power (or not receiving sufficient power). When the device 100 is operating in contactless mode the amount of power that can be harvested from the wireless signal transmitted by the terminal 102 will be dependent on the distance between the device 100 and the terminal 102. During use the user may inadvertently vary the position of the device 100 such that the power drops while the first function is being performed. Accordingly, to avoid the power management unit 202 detecting that the biometric module 200 is not receiving sufficient power and the display screen being updated to no longer display authenticated information in response to temporary and inadvertent movement of the device 100 away from the terminal 102, the power management unit 202 may be configured to implement hysteresis or delay techniques (e.g. the power management unit 202 may be configured to notify the control unit 204 that sufficient power is no longer being received if the power supply drops below the threshold for a predetermined amount of time).

Where the display screen 212 is implemented using display technology, such as, but not limited to, OLED technology or microLED technology, that will automatically cease displaying information when power is no longer supplied thereto the display screen will cease displaying authenticated information automatically when power is lost. In contrast, where the display screen 212 is implemented using display technology, such as, but not limited to EPD or LCD technology, that can display information even when power is no longer supplied thereto, then the image or information displayed by the display screen 212 has to be actively modified or updated (e.g. blanked) so that the display screen 212 no longer displays the authenticated information. However, since power is required to modify the image/information displayed by such a display screen, the authenticated information will continue to be displayed by such a display screen when the biometric module 200 has lost power. Accordingly, to be able to cease or stop displaying authenticated information after the biometric module 200 has lost power, in some cases the biometric module 200 may be configured to, when it initially detects that the biometric module 200 is receiving power, start storing a portion of the power, and only display authenticated information on the display screen 212 once sufficient power to be able to update or modify the image/information displayed by the display screen 212 has been stored. This ensures that the biometric module 200 will be able to cease displaying any authenticated information if the biometric module 200 loses power.

For example, the power management unit 202 may comprise one or more charging elements (e.g. capacitors) which are configured to store charge temporarily. The charging element(s) are intended to be used to reliably store a small amount of charge temporarily and are not intended to include an on-board power supply such as, but not limited to a battery. In some cases, the charging element(s) may be arranged and/or configured such that the charging element(s) are quickly charged by substantially all the power received (e.g. from the contact elements(s), power harvesting unit 214 or chip 106). In other words, in these cases the charging element(s) is/are charged before any of the other components of the module 200 are provided power. In other cases, the charging element(s) may be arranged and/or configured such that the charging element(s) is/are slowly charged by a portion of the power the module 200 receives while another portion of the received power is being provided to one or more other components of the module 200.

The power management unit 202 may also comprise a detection circuit which is configured to detect whether the charge (e.g. voltage) of the one or more charging elements exceeds a threshold. The threshold may be selected so that there is at least sufficient power stored in the charging element(s) to update the display screen so as to cease the display of any authorized information (e.g. the power to blank the display). The threshold may be fixed or configurable. The threshold may be based on the parameters of the display screen 212. Specifically, the amount of power required to update the display screen so as to cease the display of any authorized information will depend on the size of the display screen and the display technology used to implement the display screen. For example, when the display screen is implemented by display technology that will only display information when power is applied thereto, the amount of power to update such a display screen so as to cease display of authorized information will be zero. In contrast, when the display screen is implemented by display technology that can display information even when power is not applied thereto, the amount of power to update such as display screen so as to cease display of authorized information will be non-zero.

In some cases, the detection circuit may be implemented by a brown-out detection circuit. As is known to those of skill in the art, a brown-out detection circuit monitors a supply voltage level and compares it to one or more thresholds and triggers an action based on whether the supply voltage falls below or exceeds one of the thresholds. For example, in some cases a brown-out detection circuit may have a low (or falling) threshold and/or a high (or rising) threshold. In these cases, when the brownout detection circuit detects that the monitored supply voltage falls below the low threshold the brownout detection circuit triggers one action (e.g. reset of the device) and when brownout detection circuit detects that the monitored supply voltage is above the high threshold the brownout detection circuit another action (e.g. coming out of reset). To use a brown-out detection circuit to detect when the charge of a charging element exceeds a minimum threshold, the high or rising threshold of the brown-out detection circuit may be set to the minimum threshold. In some cases, to avoid spikes in the power supply from triggering an action the brownout detection circuit may implement some hysteresis or delay. For example, the brownout detection circuit may be configured to only trigger an action when the power supply is above the high threshold for a predetermined period of time or below the low threshold for a predetermined period of time.

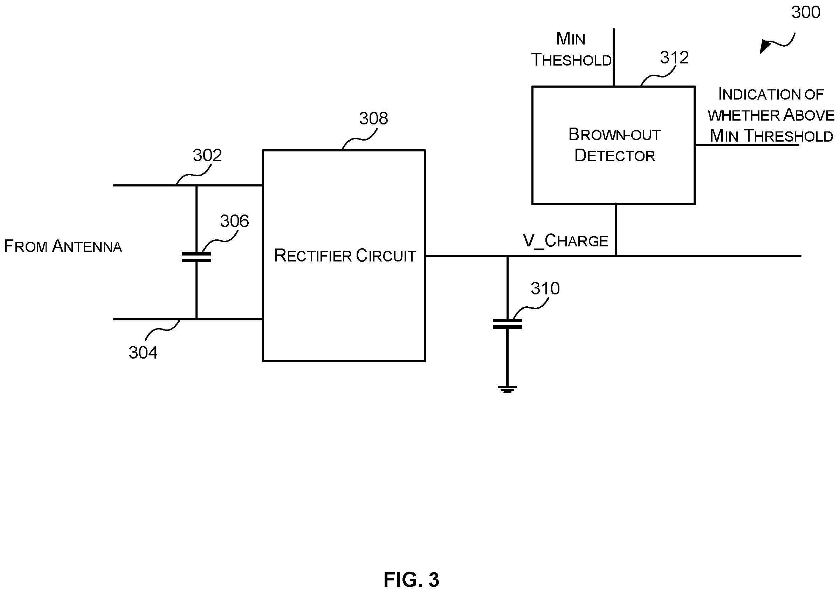

Reference is now made to FIG. 3 which illustrates an example circuit 300 for storing energy received from the terminal when the device 100 is operating in contactless mode (i.e. the energy harvested from the wireless signal received by the antenna) and only enabling the biometric module 200 to perform biometric authentication and/or display authenticated information on the display screen 212 if the stored power exceeds a threshold. All or portion of the circuit 300 may form part of the power harvesting unit 214 and/or the power management unit 202.

The circuit 300 comprises first and second inputs 302 and 304 from the antenna 104 and a first capacitor 306. The capacitor 306 is positioned across the two inputs 302 and 304. Capacitor 306 is a tuning capacitor that tunes the antenna 104 to the frequency of the signal emitted by the terminal 102. In some examples, the signal emitted by the terminal 102 may be an NFC signal at a frequency of 13.56MHz.

The circuit 300 further comprises a rectifier circuit 308 coupled to the terminals of the capacitor 306. The rectifier circuit 308 operates to rectify the voltage induced by the antenna 104.

The circuit 300 further comprises a charging element 310 to store charge. In this example, the charging element 310 is a capacitor which may be referred to herein as a reservoir capacitor. However, it will be evident to a person of skill in the art that this is an example only and any other suitable charging element may be used such as a super capacitor. The charging element 310 is coupled to the output of the rectifier circuit 308 such that the charging element 310 will be charged by the rectifier circuit 308 when the device 100 is operating in contactless mode (i.e. is receiving power via the antenna 104 from a wireless signal (e.g. NFC signal) transmitted by the terminal 102). The capacitor 310 may also act as a smoothing capacitor.

The circuit 300 further comprises a minimum threshold detection circuit 312 which is configured to determine when the charge stored by the charging element 310 exceeds a minimum threshold. In this example the minimum threshold detection circuit 312 is implemented as a brown-out detector which is configured to detect when the charge stored by the capacitor 310 (V_Charge) exceeds a minimum threshold and output an indication of whether the charge stored by the charging element 310 exceeds the minimum threshold. As described above, the minimum threshold may be set so that the charging element 310 holds enough, or sufficient, charge to update the display screen 212 so as to cease displaying authenticated information. This ensures that any authenticated information displayed on the display screen will be able to be removed even if the biometric module 200 stops receiving power from the terminal 102 (or another power source).

As is known to those of skill in the art, when the device 100 first starts receiving power from the wireless signal transmitted by the terminal 102 via the antenna 104 the rectifier circuit 308 will output a voltage which will charge the capacitor 310. When the capacitor 310 is fully charged and the device 100 is receiving power from terminal then the power output by the rectifier circuit will be used to power the biometric module 200 and the capacitor 310 remains charged. Subsequently when the device 100 stops receiving power from the terminal 102 (e.g. because the device 100 is moved out of range of the terminal 102) charge can be drawn from the capacitor 310 to power the biometric module 200. Specifically, charge can be drawn from the capacitor 310 to update the display screen 212 to stop displaying authenticated information.

Although not shown in FIG. 3, the brown-out detector 312 may also be used to detect when the biometric module 200 is no longer receiving power (or no longer receiving sufficient power). For example, the brown-out detector 312 may receive a low power threshold and may be configured to detect when V_Charge has dropped below the low power threshold.

Where the display screen 212 is implemented by a display technology that will only display an image, or information, when power is applied thereto the biometric module 200 may not comprise charging elements or a detection circuit as the display screen 212 will cease displaying information automatically when power is lost. Accordingly the charging elements and the detection circuit are optional features. Not including these features in the biometric module can save space and may make the biometric module less complex.

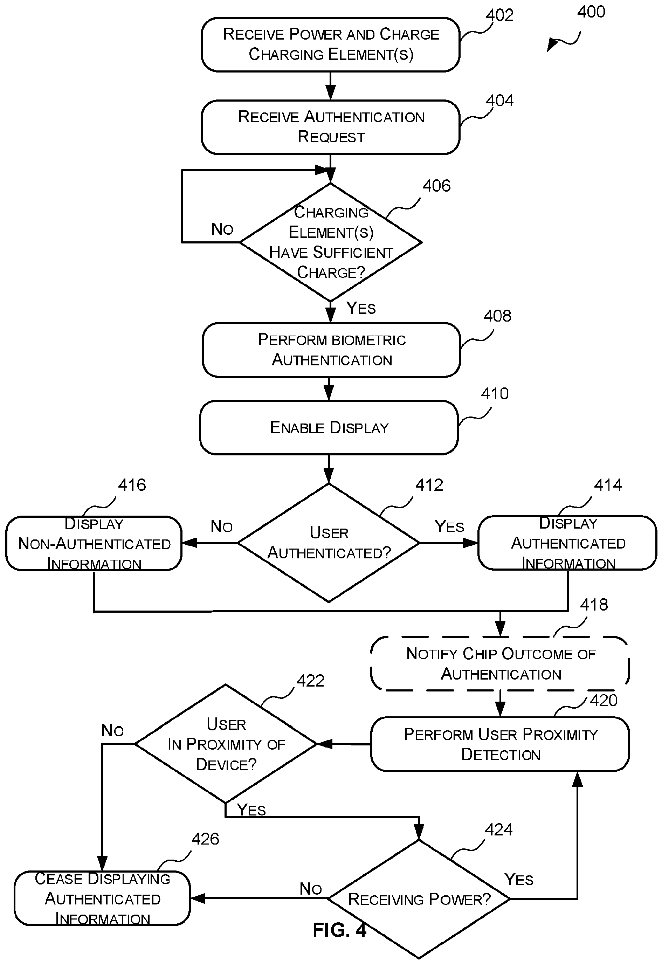

Reference is now made to FIG. 4 which illustrates an example method 400 of operating the biometric module 200 to obtain biometric data for use in biometrically authenticating the user and display authenticated information to a biometrically authenticated user which may be executed by the control unit 204 of FIG. 2 when the device 100 is operating in contact mode or contactless mode (i.e. when the device 100 is communicating with, and receiving power from, a terminal 102) to perform a first function associated with the device. The method 400 begins at block 402 where the control unit 204 begins receiving power from the terminal 102 (i.e. is powered) (e.g. via the power management unit) and begins storing energy in one or more charging elements (e.g. capacitors).

As described above, when the device 100 is operating in contact mode the device 100 (and thus the biometric module 200) receives power via the contact elements and when the device 100 is operating in contactless mode the device 100 (and thus the biometric module 200) receives power via the antenna. As described above, the biometric module 200 may be directly connected to the contact element(s) and/or the antenna so that the biometric module 200 can receive power (or harvest power) directly therefrom, or the contact element(s) and/or the antenna may only be connected to the chip 106 and the biometric module 200 may receive power from the contact element(s) or the antenna via the chip 106.

As described above, the biometric module 200 (e.g. the power management unit 202) may comprise one or more charging elements (e.g. one or more capacitors) for storing power or energy which are arranged so that the one or more charging elements are charged when the biometric module 200 receives power from an external power source (e.g. from the terminal 102).

At block 404, the control unit 204 receives a biometric authentication request from the chip 106 as part of performing the first function associated with the device 100. In some cases, the authentication request may have been initiated by the chip 106. In other cases, the authentication request may have been initiated by the terminal 102 as part of performing the first function. The method 400 then proceeds to block 406.

At block 406, the control unit 204 determines whether the charging element(s) has/have sufficient charge or power to be able to cause the display screen 212 to cease displaying authenticated information in the event that the biometric module 200 is no longer receiving power from an external power source. If it is determined that the charging element(s) has/have sufficient charge, then the method 400 proceeds to block 408. If, however, it is determined that the charging element(s) do not have sufficient charge then the method 400 remains at block 406 until the charging element(s) do have sufficient charge.

Waiting until the charging element(s) has/have sufficient power so that any authenticated information displayed on the display screen 212 can be removed therefrom ensures that the biometric module 200 does not display authenticated information on the display screen 212 until it knows it will be able to remove the authenticated information from the display screen 212 even in the event of loss of the power supply. As described above, the amount of charge or power required to cease displaying authenticated information on a display screen 212 in the event that the biometric module 200 loses its power source may be based on the size of the display screen and the display technology used to implement the display screen. For example, where the display screen is implemented by display technology (e.g. OLED or microLED) that will cease displaying information when power is no longer applied thereto then the power required to cease displaying authenticated information will be zero. However, where the display screen is implemented by display technology (e.g. LCD or EPD) that can continue to display information even when power is no longer applied thereto then the amount of power required to cease displaying authenticated information will be non-zero.

As described above, in some cases the power management until 202 of the biometric module 200 (or another component thereof) may comprise a detection circuit (e.g. a brown-out detection circuit) that is configured to detect whether the one or more charging elements have sufficient power by comparing the energy or power stored in the charging element(s) to a threshold. The threshold may be fixed based on the display technology used to implement the display screen and the size of the display screen or area of the display screen, or the threshold may be configurable based on the display technology and size of the display. Once it has been determined that sufficient power or energy has been stored by the charging element(s) the method 400 proceeds to block 408.

At block 408, the control unit 204 causes the biometric module 200 to initiate a biometric authentication process. As described above, in some cases, the control unit 204 is configured to cause the biometric module 200 to initiate the biometric authentication by causing the biometric sensor 208 (via the biometric controller 206) to capture biometric data of a user; and performing biometric matching at the control unit 204 between the biometric data captured by the biometric sensor 208 and stored template data to determine if the user is biometrically identified or authenticated. In other cases, the biometric matching of the biometric data captured by the biometric sensor 208 may be performed by the chip 106. In yet other cases, the biometric matching of the biometric data captured by the biometric sensor 208 may be performed by the control unit 204 in conjunction with the chip 106 (e.g. the control unit 204 and the chip 106 may each perform a portion of the biometric matching process). Once the biometric authentication has been performed the method 400 proceeds to block 410.

At block 410, the control unit 204 enables the display screen 212. In some cases, the control unit 204 may be configured to enable the display screen 212 by causing the power management unit 202 to supply power to the display controller 210 and the display screen 212. In some cases, the control unit 204 may be configured to only enable the display screen 212 after the biometric authentication processing is complete because in some cases the power being received from the terminal may not be sufficient to perform biometric authentication and power the display screen 212. Once the control unit 204 has enabled the display screen 212 the method 400 proceeds to block 412.

At block 412, the control unit 204 determines whether the user was biometrically authenticated by the biometric authentication process performed at block 408. If the user was biometrically authenticated, then it is 'safe' to display authenticated information and the method 400 proceeds to block 414 where the control unit 204 causes the display screen 212 to display authenticated information. The control unit 204 may cause the display screen 212 to display authenticated information by sending instructions and/or other signals to the display controller 210 which identifies the authenticated information to be displayed and causes the display controller 210 to control the display screen 212 so as to display the authenticated information. The authenticated information may be generated, for example, by the control unit 204 or the chip 106. In some cases, the authenticated information may comprise information for use in performing the first function associated with the device. For example, where the first function is performing a credit card transaction via the terminal 102 the authenticated information may be a dCVV which is generated by the chip 106. In some cases, non-authenticated information may also be displayed together with the authenticated information.

If, however, the user was not biometrically authenticated then it is not 'safe' to display authenticated information and the method 400 proceeds to block 416 where the control unit 204 causes the display screen 212 to display non-authenticated information. For example, in some cases the control unit 204 may cause the display screen 212 to display information notifying the user that the biometric authentication failed. In some cases, if a first biometric authentication has failed (i.e. the user was not authenticated or identified via the first biometric authentication process) a second biometric authentication process may be performed. In these cases, the non-authenticated information may comprise information notifying the user that another biometric authentication will be attempted. In some cases, each subsequent biometric authentication may be performed with a higher matching threshold (i.e. the biometric data may have to more closely match the template data for the user to be authenticated or identified).

Once block 414 or block 416 has been completed the method 400 may proceed to block 418 or the method 400 may proceed directly to block 420. For example, as described above the biometric matching of the captured biometric data may be performed by the biometric module 200, the chip 106, or the biometric module 200 in conjunction with the chip 106. Where the biometric matching is performed entirely by the biometric module 200, the method 400 may proceed to block 418 where the control unit 204 notifies the chip 106 whether or not the user was authenticated. Where, however, the biometric matching is performed at least partially by the chip 106, the chip 106 may know, or be aware of, the outcome of the authentication and so the method 400 may proceed directly to block 420.

Once the chip 106 is aware of the outcome of the biometric authentication, the chip 106 may then respond accordingly to the terminal 102. In some cases, the first function may only be completed if the user was biometrically authenticated. Accordingly, in these cases if the user was not biometrically authenticated the chip 106 may cease performing the first function.

At block 420, the control unit 204 causes the biometric module 200 to perform user proximity detection or user present detection (e.g. to determine whether the user is still in the proximity of (e.g. in contact with) the device 100). As described above, in some cases, the control unit 204 may be configured to determine whether the user is proximate the device 100 by: causing the biometric sensor 208 to capture proximity data that can be used to determine whether the user is proximate the device 100; and determining from the captured proximity data whether the user is still present. In some cases, performing user proximity detection consumes less power than performing full biometric authentication. This may allow the biometric module 200 to both display information on the display screen 212 and perform user proximity detection when the biometric module 200 is receiving a limited amount of power from the terminal (e.g. when the device 100 is operating in contactless mode). In contrast, when the biometric module 200 is receiving a limited amount of power from the terminal 102 (e.g. when the device 100 is operating in contactless mode) the biometric module 200 may not be able to both display information on the display screen 212 and perform full biometric authentication.

In some cases, the biometric data captured by the biometric sensor 208 for use in performing biometric authentication may be different then the proximity data captured by the biometric sensor 208 for use in performing user proximity detection or user presence detection. For example, as described above, in some cases the biometric sensor 208 may be able to operate in in a first mode where it can capture biometric data for use in performing biometric authentication and a second mode where it can capture different data (e.g. proximity data) for use in performing user proximity detection. For example, where the biometric sensor is a fingerprint sensor the fingerprint sensor may be able to operate in fingerprint sensing mode to obtain a fingerprint scan or image of the user's finger, or a finger detection mode to determine if a finger is touching, or in contact with, the sensor. In this example, to perform user proximity detection or user presence detection the control unit 204 may be configured to cause the display screen 212 to operate in the finger detection mode to determine if a finger is in contact with the biometric sensor 122, and the control unit 204 may determine that the user is in proximity of the device 100 if the proximity data obtained when the biometric sensor 122 is operating in finger detection mode indicates that the user's finger is touching (or is in contact with) the biometric sensor 122. Once the user proximity detection or the user presence detection has been performed the method 400 proceeds to block 422.

At block 422, the control unit 204 determines whether, based on the user proximity detection, the user is proximate the device 100 or whether the user is present (e.g. whether the user's finger is in contact with the fingerprint sensor). If it is determined that the user is proximate the device 100 then it is still 'safe' to continue to display authenticated information (if displayed) and the method 400 proceeds to block 424 where a determination is made as to whether the biometric module 200 is still receiving power from the terminal 102. If, however, it is determined, based on the user proximity detection, that the user is not proximate the device 100 or the user is not present then it is not 'safe' to display authenticated information and the method 400 proceeds to block 426 where the control unit 204 causes the display screen 212 to cease displaying authenticated information.

At block 424, the control unit 204 determines whether the biometric module 200 is still receiving power from the terminal 102 (e.g. directly or indirectly via the antenna or the contact element(s)). In some cases, the power management unit 202 may comprise a circuit or module for monitoring the power received (e.g. from the terminal directly or indirectly from the antenna or the contact element(s)) and the power management unit 202 may notify the control unit 204 when it is no longer receiving sufficient power or energy to power the biometric module 200. If it is determined that the biometric module 200 is no longer receiving power (or sufficient power) from the terminal 102 it is no longer 'safe' to display authenticated information because the biometric module 200 can no longer verify the user (e.g. via biometric authentication) or verify the user is still present or proximate the device 100 (e.g. via user proximity detection or user presence detection) so the method 400 proceeds to block 426.

At block 426, the control unit 204 causes the display screen 212 to cease displaying authenticated information.

In some cases, the control unit 204 may cause the display screen 212 to cease displaying authenticated information by causing the display screen 212 to display an image or information that does not comprise authenticated information. However, depending on the display technology and whether or not the biometric module 200 is still receiving sufficient power for operation thereof, the display screen 212 may continue to display non-authenticated information. For example, if the display screen is currently displaying a company logo (e.g. non-authenticated information) and a dCVV (e.g. authenticated information) the control unit 204 may cause the display screen 212 to no longer display the dCVV (e.g. authenticated information), but to continue to display the logo (e.g. non-authenticated information). Causing an updated or new image to be displayed on the display screen 212 requires power so if the biometric module 200 is not currently receiving sufficient power for operation the power required to update the information or image displayed by the display screen may be obtained, or drawn, from the one or more charging elements.

In other cases, the control unit 204 may cause the display screen 212 to cease displaying authenticated information by blanking the display (e.g. causing the display screen 212 to no longer display any information or image). Where the display screen 212 is implemented using display technology that will cease displaying information when power is removed therefrom then this can be accomplished by no longer supplying power to the display screen 212. Where, however the display screen 212 is implemented using display technology that can continue to display information even after power is removed therefrom then this can be accomplished by causing an update to the image displayed by the display screen 212. This, however, requires power. Where the biometric module 200 is still receiving power from the terminal 102 the power used to cause the image displayed by the display screen 212 to be blanked may be drawn from the power received from the terminal as normal. Where, however, the biometric module 200 is no longer receiving power from the terminal 102 the power used to cause the image displayed by the display screen to be blanked may be drawn from the one or more charging elements (e.g. charging capacitors/reservoir capacitors). Accordingly, in these cases both authenticated and non-authenticated information are removed from the display screen.

In some cases, once the user has been biometrically authenticated, the biometric module 200 may temporarily store authenticated information (e.g. authenticated information received from the chip 106) in one or more storage elements (not shown) of the biometric module 200, such as, but not limited to, memory or the like, to display the authenticated information on the display screen 212. To ensure that the authenticated information cannot be recovered from the storage element(s) after the stored authenticated information is no longer required by the biometric module (e.g. the authenticated information is no longer to be displayed by the display screen 212), the control unit 204 may be configured to, after determining that the display screen 212 is to cease displaying the authenticated information (e.g. because the user is no longer present or power has been lost), cause any authenticated information stored in the storage elements of the biometric module to be erased or removed therefrom.

Similarly, in some cases, the chip 106 may temporarily store authenticated information in one or more storage elements (not shown) of the chip 106. For example, as described above, the chip 106 may generate authenticated information and/or receive authenticated information from the terminal which is displayed on the display screen 212. In these cases, the control unit 204 may be configured to, after determining that the display screen 212 is to cease the control unit 204 may be configured to, after determining that the display screen 212 is to cease displaying the authenticated information (e.g. because the user is no longer present or power has been lost), cause any authenticated information stored in the storage elements of the chip 106 to be erased or removed therefrom. Erasing or removing the authenticated information from the storage element(s) of the biometric module 200 and/or the chip 106 in this way may provide another barrier to an attacker being able to access the authenticated information.

Once the control unit 204 has caused the display screen 212 to cease displaying authenticated information and optionally causes any authenticated information stored in the storage elements of the biometric module to be deleted, the method 400 ends.

Although in the method 400 of FIG. 4 the display screen 212 is enabled regardless of whether the user has been biometrically authenticated and only the type of information that is displayed on the display screen 212 differs based on whether the user was biometrically authenticated or not, in other examples the display screen 212 may only be enabled if the user is biometrically authenticated. Accordingly, in these examples the display screen 212 may be disabled (i.e. will not display any information) until the user is biometrically authenticated. This may allow the display screen to remain hidden until the user is biometrically authenticated or identified.

Although in FIG. 4 the biometric authentication and the displaying of authenticated information is only performed if sufficient power has been stored by the charging element(s) to be able to cease displaying authenticated information, in other examples (e.g. when the display screen 212 is implemented by a display technology that will only display an image, or information, when power is applied thereto) the biometric module may not comprise charging elements and so the method 400 may proceed directly to block 408 after receiving a request to perform biometric authentication (e.g. block 406 may be skipped).

In some cases, the chip 106 may be configured to communicate with the terminal 102 in accordance with a contactless transmission protocol when the device 100 is operating in contactless mode whereby a message, or command, send by the terminal sets a specified waiting time for response from the chip to maintain a connection with the terminal. The contactless protocol may be specified by the ISO14443 and/or EMVCo^{®} standards, for example. The chip 106 can communicate requests to the terminal 102 that extend the waiting time for response, but each request is to be sent prior to the expiry of the existing waiting time, otherwise the terminal assumes connection to the chip has failed. Thus, the transmission protocol governing communications between the chip and terminal may set timing restrictions on those communications. In particular, the contactless protocol may be such that failure by the chip 106 to respond to the terminal 102 prior to the expiry of the specified waiting time (by communicating a waiting time extension request or some other message) causes the connection between the chip and the terminal 101 to fail (e.g. time out).

Specifically, the ISO14443 and EMVCo^{®} standards specify that the terminal 102, having sent a command to the chip 106, sets an initial waiting time (known as the frame waiting time (FWT)) for a response from the chip 106. The FWT is the maximum amount of time permitted for the chip 106 to initiate sending a response back to the terminal 102. Failure by the chip 106 to send a response to the terminal within the FWT may result in the communication connection between the chip 106 and the terminal 102 being lost, for example timed out. The value of the FWT can be negotiated between the device 100 and the terminal 102. The waiting time extension request may be denoted S(WTX). In response to receiving the waiting time extension request, the terminal extends the waiting time for a response from the chip 106. The device 100 may extend the waiting time by the frame waiting time FWT (i.e., it may extend the waiting time by an amount equal to the initial waiting time). A waiting time extension request may be made at any time before the expiry of the current waiting time.

The biometric module 200 is configured to obtain biometric data of a user which can be used to biometrically authenticate the user (e.g. at the request of the chip 106) and display authenticated information to a biometrically authenticated user (which may be used in performing in the first function). The biometric module 200 may also perform all or portion of the biometric authentication of the user based on the captured biometric data (e.g. the biometric module 200 may perform all or a portion of a biometric matching process on the captured biometric data to biometrically authenticate the user). The processing performed by the biometric module 200 may be formed of a number of processing steps. A processing step may take longer to complete than the waiting time interval set by the terminal (e.g. the time window between successive waiting time extension requests). Accordingly, the processing performed by the biometric module 200 and the chip 106 need to be synchronized with the waiting time extension requests sent by the chip 106 to the terminal 102.

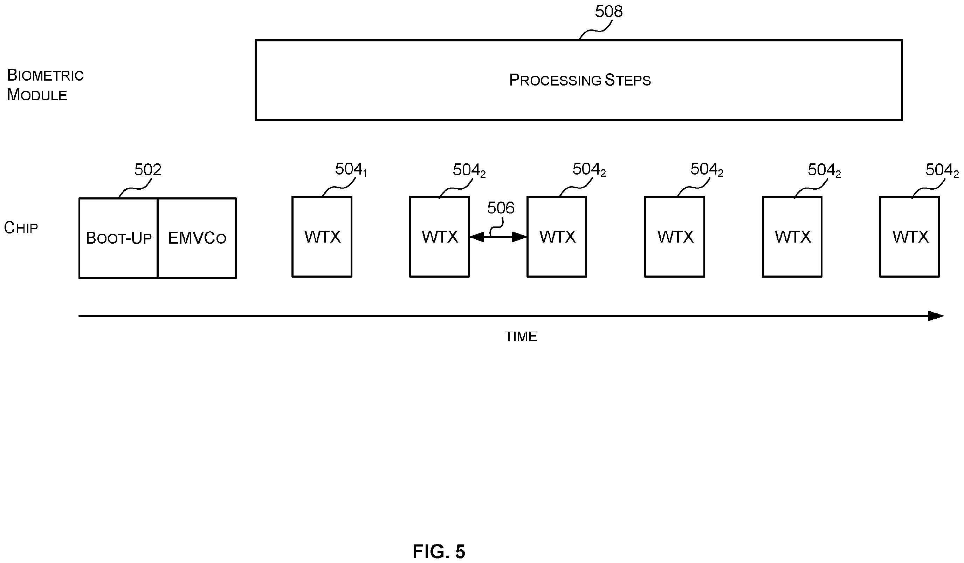

Reference is now made to FIG. 5 which illustrates the timing restrictions imposed by the ISO14443 and EMVCo^{®} standards. The boot-up of the chip 106 and biometric module 200 and communication with the terminal in accordance with the EMVCo^{®} standards is shown at 502. The series of waiting time extension requests communicated from the chip 106 to the terminal 102 are denoted 504₁ to 504₆. The time period in which the terminal expects a response from the chip 106 may be referred to herein as a waiting time interval. The waiting time internal is the time period between successive communications between the chip 106 and the terminal imposed by timing restrictions of the standard governing those communications. The waiting time interval is a time period in which a communication (e.g. a response to the command issued by the terminal 102, or waiting time extension request) is to be sent from the chip 106 to the terminal 102 to maintain the communication connection. The waiting time interval may therefore be a time period between the time the command was received from the terminal and the initial specified waiting time, or the time period between making a waiting time extension request and the new extended waiting time resulting from that request. That is, the waiting time interval may be viewed as the time period between two scheduled communications between the chip and the terminal. In this example, the waiting time interval is equal to the frame waiting time FWT. An example frame waiting time is shown at 506.

As described above, the biometric module 200 operates to capture biometric data of a user which can be used to biometrically authenticate the user and display authenticated information to a biometrically authenticated user. In some cases, the biometric module 200 may be configured to perform all or a portion of the biometric authentication of the user based on the captured biometric data (e.g. the biometric module 200 may be configured to perform all or a portion of a biometric matching process on the captured biometric data to authenticate the user). In other cases, the biometric module 200 may be configured to provide the captured biometric data to another component (e.g. the chip 106) that performs the biometric authentication and then receives information from the other component indicating whether the biometric authentication was successful or not. The performance of these functions may be requested by the terminal. The processing performed by the biometric module 200 (e.g. the processing set out in FIG. 4, for example) is generally shown at 508. As shown in FIG. 5 the processing performed by the biometric module 200 may exceed one or more waiting time intervals.

It is desirable for the biometric module 200 not to perform its functioning during the periods the chip 106 is communicating with the terminal 102. This is for two main reasons. Firstly, when the device 100 is operating in contactless mode, the power that can be harvested from the wireless signal emitted from the terminal 102 may be limited and the power that is harvested may be prioritized to support the scheduled communications with the terminal 102 necessitated by the standards the device 100 is operating in compliance with. Secondly, power drawn by the biometric module 200 during periods the chip 106 is communicating with the terminal affects the load modulation of the signal emitted by the terminal, which can appear as extra noise to the terminal. In other words, power drawn by the biometric module 200 may cause interference in the communications between the chip 106 and the terminal 102.

To avoid these problems, the processing steps 508 performed by the biometric module 200 (e.g. the steps of the method 400 of FIG. 4) may be further partitioned into a plurality of discrete operations, or tasks. Each task may take a reduced amount of time to complete than the processing step of which it forms part. Processing performed by the biometric module 200 can be started or paused on the boundaries between discrete operations. In other words, processing performed by the biometric module 200 may be paused upon completion of a discrete task, and resumed by processing a subsequent discrete task. It is possible for the processing 508 performed by the biometric module 200 to be partitioned into discrete tasks with varying degrees of granularity. For example, a discrete operation may refer to one of the biometric authentication steps described above (e.g. image acquisition by the sensor) or one of the user proximity detection steps described above (e.g. acquiring proximity data for use in performing user proximity detection). Alternatively, a discrete operation may be a combination of biometric authentication/user proximity detection steps, or part of an authentication step/proximity detection step.

The device 100 then operates to synchronise the processing of these discrete operations with the scheduled communications between the device 100 and the terminal 102 (which in this example, are the waiting time extension requests S(WTX)). The device 100 performs this synchronization so that the discrete operations are performed within the waiting period.

The Applicant's US Patent Application No. 15/883,543, describes three approaches for performing the synchronisation. It is submitted that any of the three described methods may be used to synchronize the processing performed by the biometric module 200 and the communications between the chip 106 and the terminal 102 to ensure that the communications between the chip 106 and the terminal 102 do not timeout and/or are not compromised.

In some cases, in addition to the biometric module 200, being able to obtain biometric data of a user for use in biometrically authenticating the user and displaying authenticated information (and, optionally, non-authenticated information) to an authenticated user when the device 100 (i.e. the chip 106) is in contact or contactless communication with a terminal 102 as part of performing a first function (e.g. executing a financial transaction) (which may be referred to herein as the terminal mode of operation), the biometric module 200 may also be able to obtain biometric data of a user for use in authenticating the user and displaying authenticated information (and, optionally, non-authenticated information) to a biometrically authenticated user when the device 100 is not in contact or contactless communication with a terminal 102 (which may be referred to herein as a non-terminal mode of operation).

For example, where the device 100 is a smart card implementing a credit card, the biometric module 200 may be able to provide information to a user to enable the user to securely perform a credit card transaction via, for example, the Internet or telephone. Specifically, the biometric module 200 may be configured to obtain biometric data of the user which can be used to biometrically authenticate the user and, once the user is biometrically authenticated provide them, via the display screen 212, with a dCVV, expiry date and/or the credit card number itself which may be entered on a website, or provided to an individual over the telephone, to complete the transaction. Such functionality would make it extremely difficult, if not impossible, for a person to use a stolen card to complete a transaction via the Internet or via telephone which adds an additional layer of security. A non-terminal mode in which the device 100 is used to perform the first function (e.g. executing a financial transaction) may be referred to herein as a non-terminal transaction mode.

In another example of a non-terminal mode of operation, where the device 100 is a device implementing a logical access token or accessory, the biometric module 200 may be configured to obtain biometric data of the user which can be used to biometrically authenticate the user and, once the user is biometrically authenticated provide the user, via the display screen 212, with a one time password (e.g. a QR code or another bar code) which may be or entered on a website (or scanned by a device) to gain logical access to a device or to an on-line system. This may be referred to non-terminal code mode.

In yet another example of a non-terminal mode of operation, if a user wishes to enrol a biometric on the biometric module at home, work etc., the biometric module 200 may provide instructions via the display screen 212 to help the user successfully enrol their biometric on the card. A non-terminal mode in which the device 100 is used to enrol a biometric on the biometric module 200 may be referred to herein as non-terminal enrolment mode or non-terminal biometric registration mode. A device 100 may enter non-terminal enrolment mode the first time it is powered up; when it is detected that the device 100 is connected to a specific enrolment device; or when or one or more other conditions are detected. Example methods for implementing non-terminal enrolment mode and/or for invoking or triggering non-terminal enrolment mode are described in the Applicant's US Patent No. 10,282,651. In some cases once the user has successfully completed the biometric registration or enrolment the device 100 may not be able to re-enter non-terminal enrolment mode. In other words, in some cases, once the biometric enrolment is complete, the device 100 may be locked out from entering non-terminal enrolment mode.

Since the example device 100 of FIG. 1 does not have its own internal power source, and is designed to receive power from a terminal, for the device 100 (and specifically the biometric module 200) to be able to obtain biometric data for use in biometrically authenticating the user and display authenticated information (and non-authenticated information) without receiving power from a terminal 102 (i.e. operate in a non-terminal mode) the device 100 must receive power from a removable external power supply or device. A power supply is said to be removable with respect to the device 100 if it does not form part of the device 100 and can be removed therefrom without altering the structure or function of the device 100. The removable external device may supply power to the device 100 in a contact manner (e.g. via the contact element(s)) or a contactless manner (e.g. by transmitting a wireless signal which is received by the antenna and from which energy can be harvested therefrom). Examples of external devices which may be used to provide power to the device 100 are described in the Applicant's US Patent No. 10,282,651, US Patent Application No. 62/872,524 and US Patent No. 10,187,212. Example of external devices which may be used to provide power to the device 100 include, but are not limited to a powered sleeve or overlay that interacts or makes contact with the contact element(s) of the device 100 to provide power thereto, an NFC field generator which provides power to the device 100 via the antenna, a wireless charge field generator (e.g. the "Qi" standard) that provides power to the device 100 via the antenna; or a cable with a contact plate that is connected/connectable to a power source (e.g. a USB port which can be connected to a USB power source, such as a computer) that can make contact with the contact element(s) of the device 100 to provide power thereto.

Reference is now made to FIG. 6 which illustrates an example method 600, which may be implemented by the control unit 204 of FIG. 2, of operating the biometric module 200 to perform biometric authentication and display authenticated information to a biometrically authenticated user when the device 100 is not in communication with a terminal 102, but is receiving power from an external power source such as those described in the previous paragraph (i.e. when the device 100 is operating in a non-terminal mode). The method 600 of FIG. 6 is the same as the method 400 of FIG. 4 except the method doesn't comprise receiving a request for biometric authentication from the chip 106 (block 404) nor does it comprise notifying the chip 106 of the outcome of the authentication (block 418). The remainder of the blocks 602, 606, 608, 610, 612, 614, 616, 620, 622, 624 and 626 correspond to blocks 402, 406, 408, 410, 412, 414, 416, 420, 422, 424 and 426 of the method 400 of FIG. 4 respectively. In some cases, when the device 100 is operating in a non-terminal mode the biometric module 200 may still communicate with the chip 106 to obtain the authenticated information (e.g. dCVV or credit card number) which is securely stored by, or is accessible via, the chip 106. Similarly, when the device 100 is operating in a non-terminal mode the biometric module 200 may still communicate with the chip 106 to obtain the non-authenticated information which is stored by, or is accessible via, the chip 106.

The biometric module 200 may be able to identify whether the device 100 is in communication with a terminal 102 or whether it is simply receiving power from an external power source, so as to know whether to operate in accordance with the method 400 of FIG. 4 or the method 600 of FIG. 6. The biometric module 200 may be configured to make this distinction in any suitable manner. For example, in some cases, the biometric module 200 may be configured to determine that the device 100 is not in contactless or contact communication with a terminal 102 if the biometric module 200 detects that it is receiving power, but it does not receive an authentication request from the chip 106 within a predetermined period of time.

When the device 100 is operating in a non-terminal mode the chip 106 is not in contact or contactless communication with the terminal 102 so the processing performed by the biometric module 200 in this mode (e.g. the steps set out in the method 600 of FIG. 6) does not have to be scheduled around the communications between the chip 106 and the terminal 102 which simplifies the processing performed by the biometric module 200 in this mode of operation.

In some cases, it may be difficult for a user to complete a transaction via the Internet or otherwise while maintaining proximity to the device 100 so in other example methods of operating the device 100 in a non-terminal mode the biometric module 200 may not perform user proximity detection and may only cease displaying authenticated information (and optionally, also non-authenticated information) if has been detected that the biometric module 200 is no longer receiving power (or sufficient power) from the external power source. For example, where the biometric sensor is a fingerprint sensor and user proximity detection comprises detecting whether the user's finger is in contact with the fingerprint sensor it may make it difficult for a user to complete an Internet transaction if they have to keep one of their fingers on the fingerprint sensor as it may make it difficult for them to type or navigate the Internet. Specifically, if the user proximity detection and disabling the display screen in relation to detecting the user is no longer proximate the device is disabled then the user merely has to place their finger on the sensor for authentication and once authenticated can remove their finger therefrom.

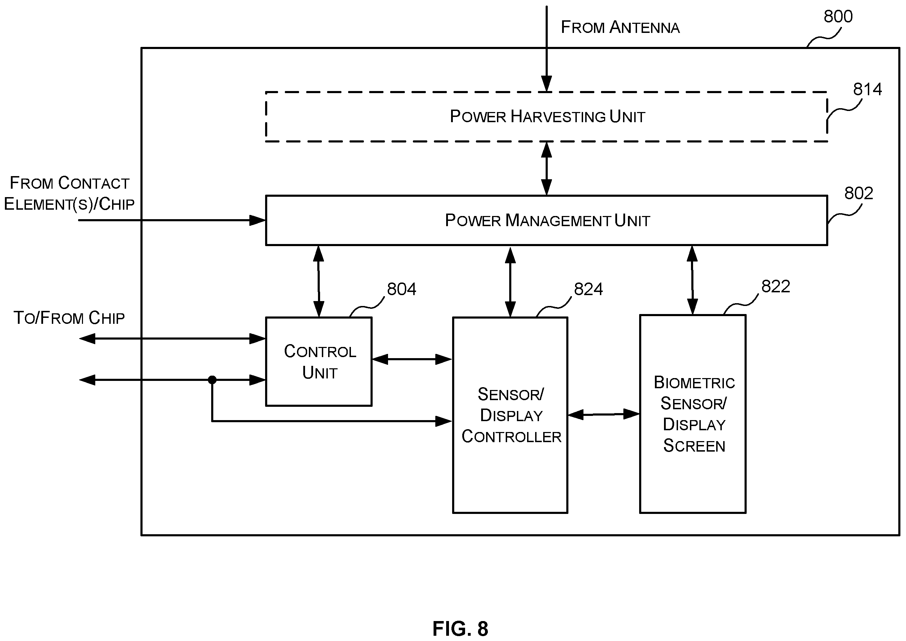

While FIG. 2 shows the biometric sensor 208 and the display screen 212 being controlled by separate and distinct controllers (i.e. biometric controller 206 controls the operation of the biometric sensor 208 and the display controller 210 controls the operation of the display screen 212) which are both controlled by the control unit 204 it will be evident to a person of skill in the art that this is an example only and that in other examples the functions of two or more of the control unit 204, biometric controller 206 and display controller 210 may be performed by a single component. For example, FIG. 8 illustrates a second example biometric module 700 which can be used to implement the biometric module 108 of FIG. 1. In this example, the biometric module 700, like the biometric module 200 of FIG. 2, comprises a power management unit 702, a control unit 704, a biometric sensor 708, a display screen 712 and, optionally a power harvesting unit 714 which operate in the same manner as the corresponding components of the biometric module 200 of FIG. 2, however the biometric module 700 comprises only a single controller 720 that controls the operation of both the biometric sensor 708 and the display screen 712. Accordingly, in this example, the single controller 720 performs the functions of the biometric controller 206 and the display controller 210 of the biometric module 200 of FIG. 2. In yet other examples, the functions of the control unit 204, the biometric controller 206, and the display controller 210 may be performed by a single component, such as a single control unit.

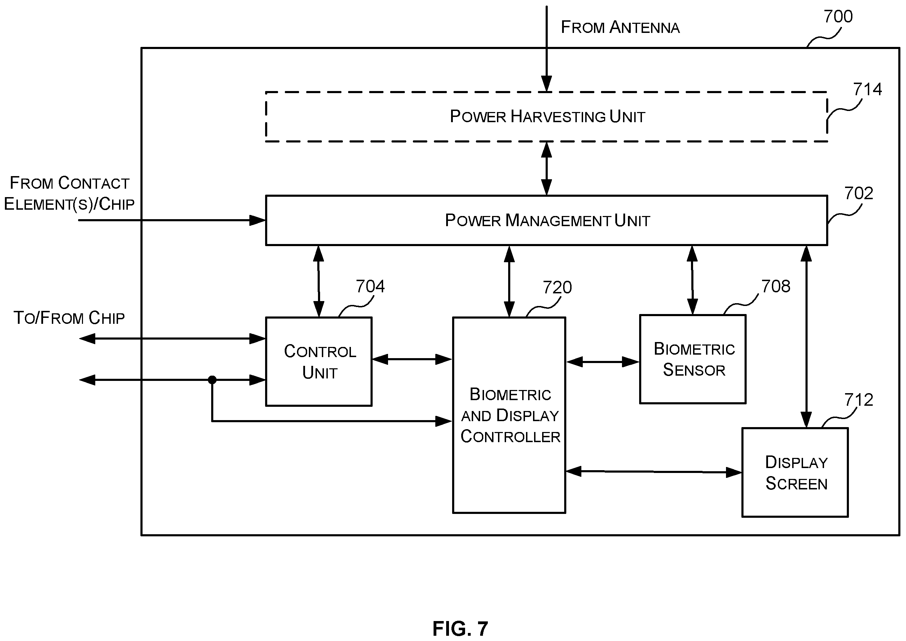

While the biometric module 700 of FIG. 7 comprises a single display screen, in other examples the biometric module 700 may comprise multiple display screens. Each display screen 712 may have its own biometric and display controller 720; a biometric and display controller 720 may be configured to control more than one display screen 712; or a single control unit may perform the functions of the control unit and the biometric and display controller. A display screen 712 may comprise multiple display areas which may be individually controlled. In these cases, the biometric and display controller 720 may be configured to separately control each display area.

While FIGS. 2 and 7 show the biometric sensor and the display screen being separate and distinct components, in other cases the biometric sensor and the display screen may be implemented by a single component. For example, FIG. 8 illustrates a third example biometric module 800 which can be used to implement the biometric module 108 of FIG. 1 in which the biometric sensor and the display screen are implemented by a single sensor/display component. In this example, like the biometric module 200 of FIG. 2 the biometric module 800 comprises a power management unit 802, a control unit 804 and, optionally a power harvesting unit 814 which operate in the same manner as the corresponding components of the biometric module 200 of FIG. 2. However, the biometric module 800 of FIG. 8 only comprises a single sensor/display component 822 which can perform biometric sensor functions and display functions, which is controlled by a single controller 824 (e.g. ASIC). Specifically, the single controller 824 (e.g. ASIC) is configured control the sensor/display component 822 to cause it to capture biometric data of the user and to display authenticated and/or non-authenticated information as directed by the control unit 804.

While the biometric module 800 of FIG. 8 comprises a single biometric sensor/display component, in other examples the biometric module 800 may comprise multiple biometric sensor/display components. In these examples, each biometric sensor/display component may have its own sensor/display controller 824; or a sensor/display controller 824 may be configured to control more than one biometric sensor/display component. A biometric sensor/display component 822 may comprise multiple display areas and/or biometric sensing areas which may be individually controlled. In these cases the sensor/display controller 824 may be configured to separately control each display area and/or biometric sensing area.

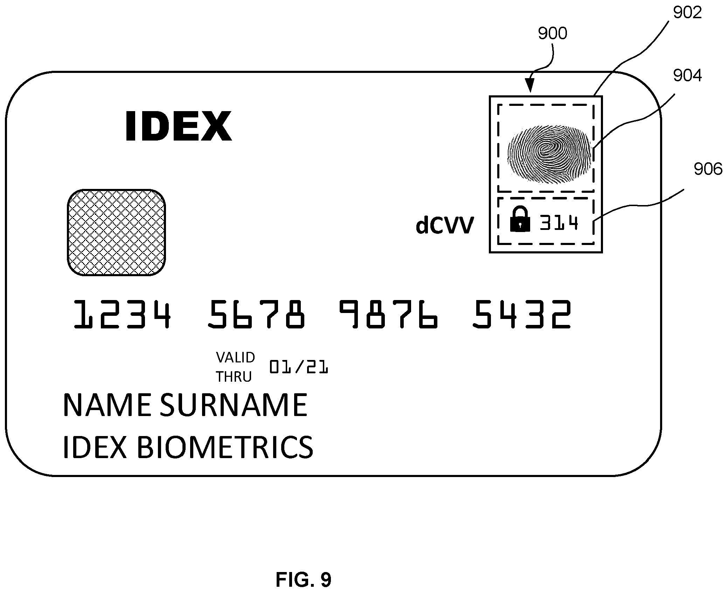

In some cases, the single sensor/display component 822 may be able to perform biometric sensing functions and display functions concurrently or simultaneously. In these cases, the sensor/display screen may be divided into sections or portions wherein the different sections or portions perform the sensor functions and the display functions respectively. For example, FIG. 9 shows an example sensor/display component 900 for a smart card where the sensor/display component 900 is configured to display information and perform fingerprint sensing concurrently. In this example the sensor/display component 900 has a screen 902 which is divided into a fingerprint sensing section or area 904 and a display section or area 906. The fingerprint sensing section 904 is configured to perform fingerprint sensing. The display section 906 is used to display information to the user (e.g. authorized information, such as a dCVV as shown in FIG. 9). As described above, the fingerprint sensing section 904 could be configured to operate in one of two modes - a fingerprint sensing mode (i.e. a biometric data sensing mode) in which the fingerprint sensing section detects ridges and valleys which are used to match against a template, and a finger detection mode (i.e. a user presence/proximity sensing mode) which is used to detect whether the user's finger is contacting the fingerprint sensing section 904.

In other cases, the combined sensor/display component may not be able to perform biometric sensing functions and display functions concurrently or simultaneously. Specifically, in these cases the sensor/display component may either be able to perform biometric sensing functions or display functions at one time.

In some cases, the biometric module 108, 200 may comprise a plurality of display areas, which may be individually controlled by the control unit 126 to display authenticated and/or non-authenticated information. In some cases, each display area may constitute a different display screen. In other cases, each display area may form part of the same display screen. In yet other cases, two or more of the display areas may form part of the same display screen and at least one of the display areas may form all or part of another display screen.

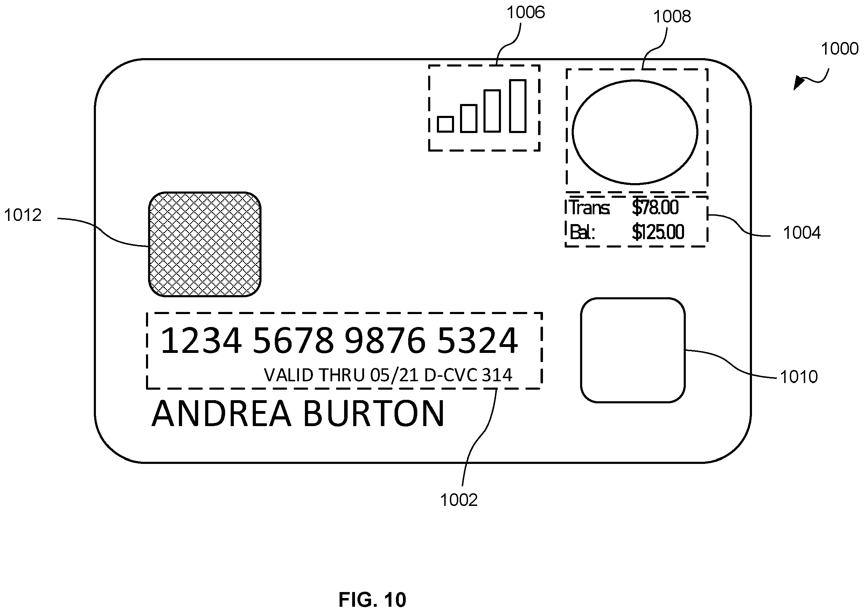

For example, FIG. 10 shows an example implementation of the device 100 of FIG. 1 wherein the device 100 comprises a plurality of display areas which may be individually controlled by the control unit 126 to display authenticated and/or non-authenticated information. In this example the device 100 is implemented as a smart card 1000. In FIG. 10 the biometric sensor 1010 corresponds to the biometric sensor 122 of FIG. 1 and the contact element(s) correspond to the contact element(s) 110 of FIG. 1. In the example of FIG. 10, the smart card 1000 is a credit card which comprises a plurality of display areas 1002, 1004, 1006 and 1008 which form the display screen 124 of FIG. 1. However, in other examples at least two of the display areas may form all or part of different display screens.

In the example of FIG. 10, all of the display areas 1002, 1004, 1006 and 1008 are on the same face or side (e.g. front) on the smart card 1000, however, in other examples at least one display area may be on a first face or side of the smart card and at least one display area may be on a second, different, face or side of the smart card. For example, one display area may be on the front face or side of the smart card and another display area may be on the back face or side of the smart card.

All of the plurality of display areas may be of the same type or two or more of the plurality of display areas may be different types. For example, one or more of the display areas 1002, 1004 may be a graphic display area. A graphic display area is used to display a graphic to the user. The term 'graphic' is used herein to include, but is not limited to, a picture, an image, an icon, a logo, text and any combination thereof. A graphic display area may be static, dynamic or a static-dynamic combination. If a display area is static, then the same graphic will be displayed by that display area each time that display area is enabled or activated. In contrast, if a display area is dynamic then the graphic that is displayed by that display area can change. For example, a dynamic display area may display a first graphic when first enabled and subsequently display a second graphic. If a display area is a static-dynamic combination then a portion of the graphic that is displayed by that display area will be the same each time that display area is enabled or activated and another portion of the graphic that is displayed by that display area can change.

For example, in FIG. 10 the first display area 1002, which may be referred to herein as the main display area, is a static-dynamic combination because it is configured to display the card number which is static, the card expiry date which is static, and the dCVC which is dynamic. The second display area 1004 is dynamic, and thus may be referred to herein as the dynamic data display area, because it is configured to display the transaction amount which is dynamic and the current card balance which is dynamic. In the example of FIG. 10 the main display area 1002 covers the area of a conventional credit card or bank card where the printed or embossed card number is situated so the main display area may be configured to display the card number in a similar size, font and/or layout as conventional credit cards or bank cards.

A graphic display area may be configured to display graphics in any suitable manner. For example, a graphic display area may be configured to display the desired graphic(s) all at once, it may display the desired graphic(s) in a scrolling manner or it may display the desired graphic(s) in a sequential manner (e.g. it may a display a first graphic and after a period of time it may display a second graphic). Some graphic display areas may be configured to display one or more graphics in a first orientation (e.g. portrait), other graphic display areas may be configured to display one or more graphics in a second orientable (e.g. landscape), and other graphic display areas may be able to dynamically switch from displaying graphic(s) in the first orientation or the second orientation based on, for example, user settings or detected conditions.

A graphic display area may be implemented using any suitable display technology. For example, a graphic display area may be implemented using dot-matrix display (DMD) technology or segment-type display technology, such as seven-segment display technology. As is known to those of skill in the art a dot-matrix display is a 2-dimensional patterned array of illuminating elements, such as LEDs. DMD can be used to display arbitrary graphics (e.g. characters or images) by illuminating different sets of the illuminating elements (e.g. LEDs). In contrast, a segment display has a fixed number of illuminating elements arranged in a particular pattern that can display a certain predetermined number of different graphics (e.g. letters or numbers). Accordingly, a segment display cannot be used to display arbitrary graphics. For example, one well-known segment display is a seven-segment display which comprises seven illuminating element (e.g. LEDs) arranged in the form of a square '8' and a single illuminating element (e.g. LED) as a dot character. Different characters can be displayed by selecting the required illuminating elements. A seven-segment display is typically used to display 0-9 digital information. It will be evident to a person of skill in the art that these are examples only and the graphic display areas may be implemented using any suitable display technology.

In addition, or alternatively, to one or more of the plurality of display areas being a graphic display area, one or more of the plurality of display areas 1006, 1008 may be a highlight display area. A highlight display area is a display area used to provide highlight lighting to an existing graphic on the card 1000 to convey authenticated or non-authenticated information to the user. For example, the example card 1000 shown in FIG. 10 comprises a first graphic comprising four vertical bars and a second graphic comprising an oval. The third display area 1006 may be configured to highlight (e.g. illuminate) all, or a portion, of the first graphic in response to detecting one or more conditions; and the fourth display area 1008 may be configured to highlight (e.g. illuminate) all, or a portion, of the second graphic in response to detecting one or more conditions. It will be evident to a person of skill in the art that these are examples of graphics that can be highlighted via a highlight display area and that in other examples other graphics etc. may be highlighted to provide information to the user.

In some cases, the third display area 1006 may be configured to highlight the first graphic to indicate the field or signal strength when the card 1000 is in contactless communication with a terminal. For example, in some cases the number of bars of the first graphic that are illuminated may be based on the field or signal strength. For example, in some cases the higher the field or signal strength, the more bars of the first graphic that are illuminated; and the lower the signal strength, the fewer bars of the first graphic that are illuminated. In other cases, the third display area 1006 may be configured to highlight the first graphic in one colour when the signal strength is low (e.g. below a first predetermined threshold) and highlight the first graphic in another colour when the signal strength is high (e.g. above a second predetermined threshold). For example, the first graphic may be highlighted in red when the signal strength is low (e.g. below a first predetermined threshold) and the first graphic may be highlighted in green when the signal strength is high (e.g. higher than the predetermined threshold). It will be evident to a person of skill in the art that this is only an example of a graphic which may be used and/or highlighted to indicate the field or signal strength when the card 1000 is in contactless communication with a terminal. In other examples, the card 1000 may comprise an EMVCO ^{™} contactless indicator logo which may be highlighted to indicate the field or signal strength when the card 1000 is operating in contactless mode.

In some examples, the fourth display area 1008 may be used to indicate or convey different information depending on the state of the card 1000. For example, when the card 1000 is in communication with a terminal via its contact element(s) or antenna, the fourth display area 1008 may be configured to illuminate the second graphic to indicate that the card 1000 is being used to perform a transaction (e.g. when it is detected that the card 1000 is in communication with a terminal and the user has been biometrically authenticated). It will be evident to a person of skill in the art that the oval shown in FIG. 10 is merely representative and any graphic may be used/highlighted to indicate that the card 1000 is being used to perform a transaction. In some cases, the card 1000 may comprise the card vendor/issuer's logo and the card vendor/issuer's logo may be highlighted by a display area to indicate that the card is being used to perform a transaction. For example, if the card 1000 is a credit card issued by Mastercard^{®} then the card may comprise a Mastercard^{®} logo which is highlighted by a display area when the card is being using to perform a credit card transaction.

In contrast, when the card is operating in non-terminal mode where it is not in contact or contactless communication with a terminal but is receiving power from an external power source, the fourth display area 1008 may be configured to illuminate the second graphic to indicate that the card 1000 is receiving power from the external power source.

A highlight display area may be implemented using any suitable display technology. For example, a highlight display area may be implemented using dot-matrix display (DMD) technology or segment-type display technology, such as seven-segment display technology. For example, a highlight display area may be implemented as a large segment or a cluster of dot-matrix illuminating elements.

It will be evident to a person of skill in the art that these are example types of display areas and that a biometric module may implement other types of display areas, such as, but not limited to, a display area that is capable of performing the functions of both a graphic display area and a highlight display area.

While in the example of FIG. 10 the user's name is printed on the card 1000, in other examples the user's name may be displayed to the user as authenticated or non-authenticated information, depending upon the desired level of security and function of the card.

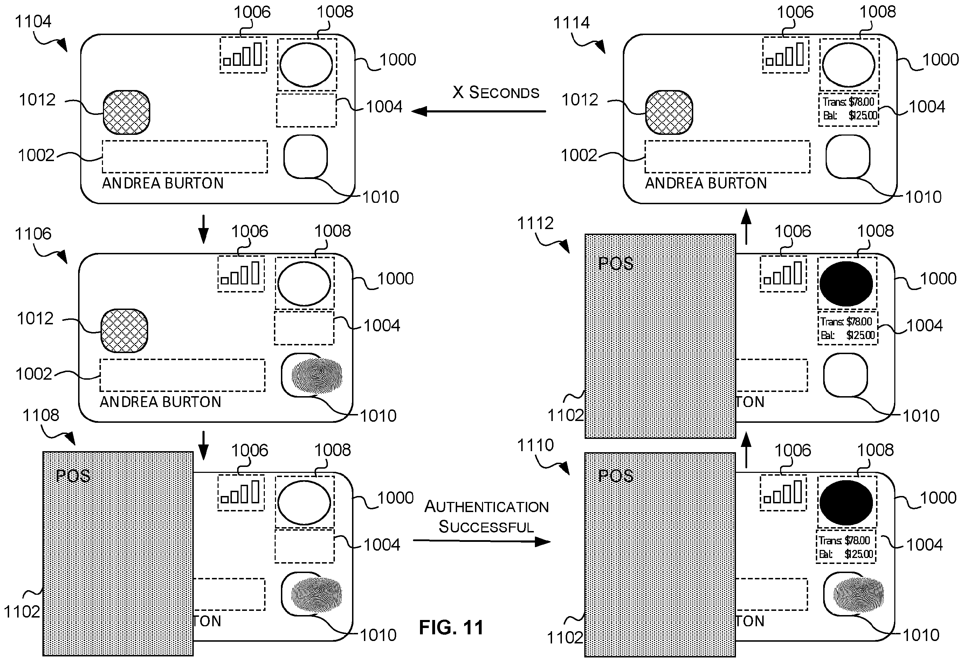

Different display areas 1002, 1004, 1006, 1008 of the plurality of display areas may be active and/or used to display different information depending on (i) the mode of operation of the card 1000, (ii) whether or not the user has been biometrically authenticated, and/or (iii) whether or not the user is present. For example, in some cases, when the card 1000 is operating in a first mode, a first set of the plurality of display areas may be active and when the card 1000 is operating in a second mode, a second set of the plurality of display areas may be active. A set of display areas may comprise one or more than one display areas. Example uses of the plurality of display areas 1002, 1004, 1006, 1008 of FIG. 10 for different operating modes will be described with respect to FIGS. 11 to 14. In other examples, certain authenticated information or non-authenticated information may be displayed on different display areas based on one or more detected conditions. For example, if it is detected that the user is left-handed, specific information may be displayed in one display area that would be visible to a left-handed user (e.g. not obscured by the user's left hand), and in contrast if it is detected that the user is right-handed, the specific information may be displayed in another display area that would be visible to a right-handed user (e.g. not obscured by the user's right hand). Detection of handedness may be ascertained during biometric authentication, or alternatively the card may be preconfigured with information indicating whether the user is right-handed or left-handed.

Reference is now made to FIG. 11 which illustrates an example use of the plurality of display areas 1002, 1004, 1006, 1008 of the card 1000 of FIG. 10 when the card 1000 is operating in contact mode where it is in communication with a terminal 1102 via its contact element(s) 1012. In this example, the dynamic display area 1004 and the fourth display area 1008 are used to display/convey information when the card 1000 is operating in contact mode.

Specifically, in the example of FIG. 11, the card 1000 starts in a first state 1104 where the card is not receiving power and thus all of the plurality of display areas 1002, 1004, 1006 and 1008 are inactive. When the user places their finger on the biometric sensor 1010 (which is a fingerprint sensor in this example) the card 1000 is transitioned to a second state 1106. The placement of the user's finger on the biometric sensor 1010 is indicated in FIG. 11 by a fingerprint. When the card 1000 is subsequently brought into contact with the terminal 1102, such that the card 1000 is operating in contact mode with the terminal 1102, the card 1000 is transitioned to a third state 1108. In this example, when the card 1000 is inserted into the terminal 1102, the terminal 1102 obscures part of the card 1000, and in particular part of the main display area 1002, which may make it difficult to use the main display area 1002 to display useful information to the user.

As described above, once the card 1000 has received sufficient power from the terminal 1102, biometric authentication of the user is performed. If the biometric authentication is successful a transaction may be performed in conjunction with the terminal 1102 and the card 1000 may transition to a fourth state 1110. In the fourth state 1110 the dynamic display area 1004 is activated and used to display dynamic authenticated information, and optionally, the fourth display area 1008 is activated so as to illuminate the second graphic to indicate that the card 1000 is being used for a transaction. It is noted that in FIGS. 11 to 14, a graphic is not illuminated if it is not shaded in and it is illuminated if it is shaded in. In this example, the dynamic display area 1004 is used to display transaction information such as the transaction amount and the card balance. This example is based on the terminal 1102 being capable of providing such transaction information to the smart card 1000 which is not currently part of terminal - smart card industry standards. It will be evident to a person of skill in the art that this is only an example of dynamic authenticated information that may be displayed to the user and that in other examples the dynamic display area 1004 may be used to display other dynamic authenticated information. In other examples, the card 1000 may not have a dynamic display area and if the biometric authentication has been successful the fourth display area 1008 may be activated so as to illuminate the second graphic to indicate that the transaction was approved or authenticated.

If the user removes their finger from the biometric sensor 1010 the card 1000 may be transitioned to a fifth state 1112 where both the dynamic display area 1004 and, optionally, the fourth display area 1008 remain active (i.e. continue to display authenticated and non-authenticated information) for a first period of time so that the user can continue to observe the authenticated and non-authenticated information displayed thereon/thereby. If the first period of time expires while the card 1000 is connected to the terminal, then the card 1000 may be transited back to the original or first state 1104. If, however, the card 1000 is subsequently removed from the terminal 1102 before the first period of time expires the card 1000 may transition to a sixth state 1114 where the fourth display area 1008 is deactivated so that the second graphic on the card is no longer illuminated), but the dynamic display area 1004 remains active for a second period of time (e.g. X seconds) to allow the user to view the authenticated information. Once the second period of time has expired (e.g. X seconds) the card 1000 is transitioned back to the original or first state 1104 where none of the plurality of display areas 1002, 1004, 1006, 1008 are active. Transitioning the card 1000 back to the original or first state 1104 may comprise deactivating the dynamic display area 1004 such that it ceases to display authenticated information. As described above, depending on the technology used to implement the display screen, causing the dynamic display area 1004 to cease displaying authenticated information may comprise actively blanking the dynamic display area 1004 or removing power thereto. In some cases, transitioning the card 1000 back to the original or first state 1104 may also comprise removing or erasing any authenticated information stored in a storage element of the biometric module 108, 200 and/or the chip 106. It is noted that in this example neither the main display area 1002 nor the third display area 1006 are activated.

The nature of the states and sequence of states in FIG. 11 is just one example to illustrate the principle of using one or a plurality of display areas, highlighting graphics and conditionally displaying and blanking authenticated information during a contact transaction to convey meaningful information to a card user in a secure manner. Other states and sequences are possible.

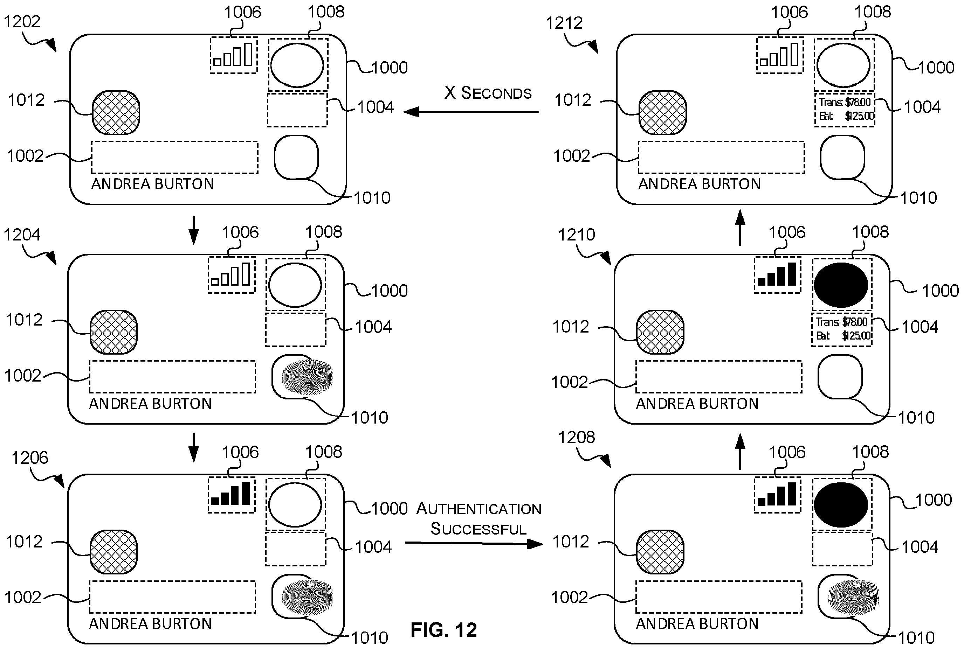

Reference is now made to FIG. 12 which illustrates an example use of the plurality of display areas 1002, 1004, 1006, 1008 of the card 1000 of FIG. 10 when the card 1000 is operating in contactless mode where the card 1000 is in communication with, and receiving power from, a terminal (not shown) via the card's antenna. In this example, the dynamic display area 1004, the third display area 1006 and the fourth display area 1008 are used to display data/information.

Specifically, in the example of FIG. 12, the card 1000 starts in a first state 1202 where the card 1000 is not receiving power and thus all of the plurality of display areas 1002, 1004, 1006 and 1008 are inactive. When the user places their finger on the biometric sensor 1010 (which is a fingerprint sensor in this example) the card is transitioned to a second state 1204. Similar to FIG. 11, the placement of the user's finger on the biometric sensor 1010 is indicated in FIG. 12 by a fingerprint. When the card 1000 subsequently is placed in the vicinity of a NFC terminal, such that the card 1000 is operating in contactless mode with the terminal, the card 1000 is transitioned to a third state 1206 where the third display area 1006 is activated so as to illuminate the first graphic (e.g. the field-strength indicator) to indicate that the card 1000 is in contactless communication with the terminal.

As described above, once the card 1000 receives sufficient power from the terminal a biometric authentication process is performed on the user. If the biometric authentication is successful, the card 1000 may be used to perform a transaction and the card 1000 is transitioned to a fourth state 1208 where the fourth display area 1008 is activated so as to illuminate the second graphic (e.g. the oval) to indicate that a transaction is in progress. If the user subsequently removes their finger from the biometric sensor 1010 the card 1000 may be transitioned to a fifth state 1210 where, while the third and fourth display areas 1006, 1008 remain active, the dynamic display area 1004 is activated and used to display dynamic authenticated information. In this example, the dynamic authenticated information comprises transaction data or information such as the transaction amount and the card balance. However, this is an example only and in other examples other dynamic authenticated information may be displayed. While in the example of FIG. 11 the dynamic display area 1004 is activated to display dynamic authenticated information after the user removes their finger from the biometric sensor 1010, in other examples the dynamic display area 1004 may be activated to display dynamic authenticated information as soon as the authenticated information is available, which may be while the user still has their finger placed on the biometric sensor 1010.

If the card 1000 is subsequently moved out of range of the terminal such that the card 1000 is no longer in contactless communication therewith, the card 1000 may be transitioned to a sixth state 1212 where the third and fourth display areas 1006 and 1008 (e.g. the contactless indicator display area and the card issuer logo display area) are deactivated such that the respective graphics are not illuminated. This may indicate to the user that the card is no longer in communication with the terminal and that the card is no longer be used to perform a transaction. In this example, the dynamic display area 1004 may remain active (e.g. continue to display authenticated information) for a period of time (e.g. X seconds where X is an integer greater than or equal to 1) after the card 1000 moves out of range of the terminal (e.g. after losing power) to allow the user to read the display. Depending on the technology used to implement the display screen, the card 1000 or the biometric module thereof may comprise a charging element which can be charged to store sufficient energy to allow the relevant display areas to be active for X seconds after the card 1000 loses power. After the period of time has elapsed from when the card 1000 moved out of range of the terminal, the card 1000 may be transitioned back to the first state 1202 where none of the plurality of display areas 1002, 1004, 1006, 1008 are active. Transitioning the card 1000 back to the first state 1202 may comprise deactivating the dynamic display area 1004 such that it ceases to display authenticated information. Depending on the technology used to implement the display screen this may comprise removing power to the dynamic display area 1004 or actively blanking the dynamic display area 1004. In some cases, transitioning the card 1000 back to the first state 1202 may also comprise removing or erasing any authenticated information stored in a storage element of the biometric module 108, 200 and/or the chip 106.

When the card 1000 is operating in contactless mode there may be a limited amount of power that is received from the terminal via the antenna. Accordingly, when the card 1000 is operating in contactless mode, one or more display areas may be de-activated or disabled to make power available to another display area or another component. For example, in some cases, the third display area 1006 may only be activated to illuminate the first graphic until the card 1000 has received enough power from the terminal to perform the biometric authentication to aid the user in placing the card in sufficient proximity of the terminal. Once the card 1000 has received sufficient power then the third display area 1006 may be deactivated to provide more power to the biometric sensor 1010 etc. to perform the biometric authentication. Once the biometric authentication has been completed the biometric sensor 1010 and any other components used to perform biometric authentication may be deactivated to provide more power to display information. After the biometric authentication is complete the third display area 1006 may remain deactivated to provide more power to the other display areas (e.g. the dynamic display area 1004 and the fourth display area 1008), or the third display area 1006 may be reactivated to indicate that the card 1000 is still in the contactless communication with the terminal.

The nature of the states and sequence of states in FIG. 12 is just one example to illustrate the principle of using different display areas, highlighting graphics and conditionally displaying and blanking authenticated information during a contactless transaction to convey meaningful information to a card user in a secure manner and making efficient use of available power. Other states and sequences are possible.

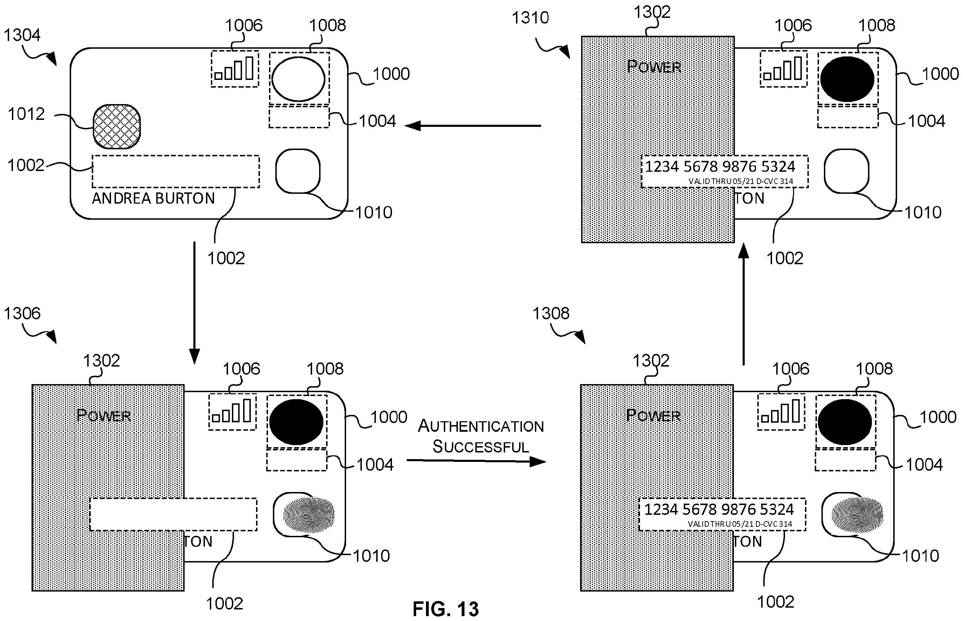

Reference is now made to FIG. 13 which illustrates an example use of the plurality of display areas 1002, 1004, 1006, 1008 of the card 1000 of FIG. 10 when the card 1000 is operating in non-terminal transaction mode where the card 1000 is not in contactless or contact communication with a terminal, but is receiving power from an external power source 1302 or from a power source built in to the card 1000 so that it can display authenticated information that can be used to complete a transaction (e.g. an e-commerce financial transaction) or another activity. The external power source 1302 may be any suitable external power source for powering a smart card 1000 such as, but not limited to, the external power sources described above. The external power source 1302 may preferably be designed so as to not obscure the main display area 1002 so that the main display area 1002 can be used to provide data/information to the user when operating in non-terminal transaction mode. In this example, the main display area 1002 and the fourth display area 1008 (e.g. the display area used to illuminate the second graphic on the card 1000) are used to display or convey authenticated and/or non-authenticated information.

Specifically, in the example of FIG. 13, the card 1000 starts in a first state 1304 where the card is not receiving power and thus all of the plurality of display areas 1002, 1004, 1006 and 1008 are inactive. When the user places their finger on the biometric sensor 1010 (which is a fingerprint sensor in this example) and connects the card to an external power source 1302 such that the card 1000 is receiving power therefrom, the card 1000 is transitioned to a second state 1306. In the second state 1306 the fourth display area 1008 is activated so as to illuminate the second graphic (e.g. the oval). As described above, this may indicate to the user that the card 1000 is receiving power from the external power source 1302.

As described above, once the card 1000 receives sufficient power from the external power source 1302 a biometric authentication process is performed on the user. If the biometric authentication is successful, the card 1000 is transitioned to a third state 1308 where the main display area 1002 is activated so as to display dynamic and/or static authenticated information. In this example the authenticated information that is displayed in the main display area 1002 comprises the card number, the card expiry data and the CVV or d-CVC. However, this is simply an example and in other examples other authenticated information may be displayed in the main display area 1002.

In this example, if the user subsequently removes their finger from the biometric sensor the card 1000 may be transitioned to a fourth state 1310 where the main display area 1002 and the fourth display area 1008 remain active (e.g. continue to display/convey information) for a first period of time. This may allow the user to more easily use the authenticated information displayed on the card. For example, it may allow the user to use their hand(s) to enter the credit card number etc. into a website to complete a transaction.

If the first period of time expires while the card 1000 is still receiving power, then the card 1000 may be transited back to the original or first state 1304. If the card 1000 is subsequently disconnected from the external power source before the first period of time expires such that the card 1000 is no longer receiving power, the card 1000 may be transitioned back to the first state 1304 where none of the plurality of display areas 1002, 1004, 1006, 1008 are active. Transitioning the card 1000 back to the first state 1304 may comprise deactivating the main display area 1002 so that it does not display authenticated information, and deactivating the fourth display area so that it does not illuminate the second graphic (e.g. the oval). Depending on the technology used to implement the display screen this may comprise removing power to the main display area 1002 and the fourth display area 1008; or actively blanking the main display area 1002 and the fourth display area 1008. In some cases, transitioning the card 1000 back to the first state 1304 may also comprise removing or erasing any authenticated information stored in a storage element of the biometric module 108, 200 and/or chip 106.

The nature of the states and sequence of states in FIG. 13 is just one example to illustrate the principle of using different display areas, highlighting graphics and conditionally displaying and blanking authenticated information during use of a card in a non-terminal transaction mode to convey meaningful information to a card user in a secure manner. Other states and sequences are possible.

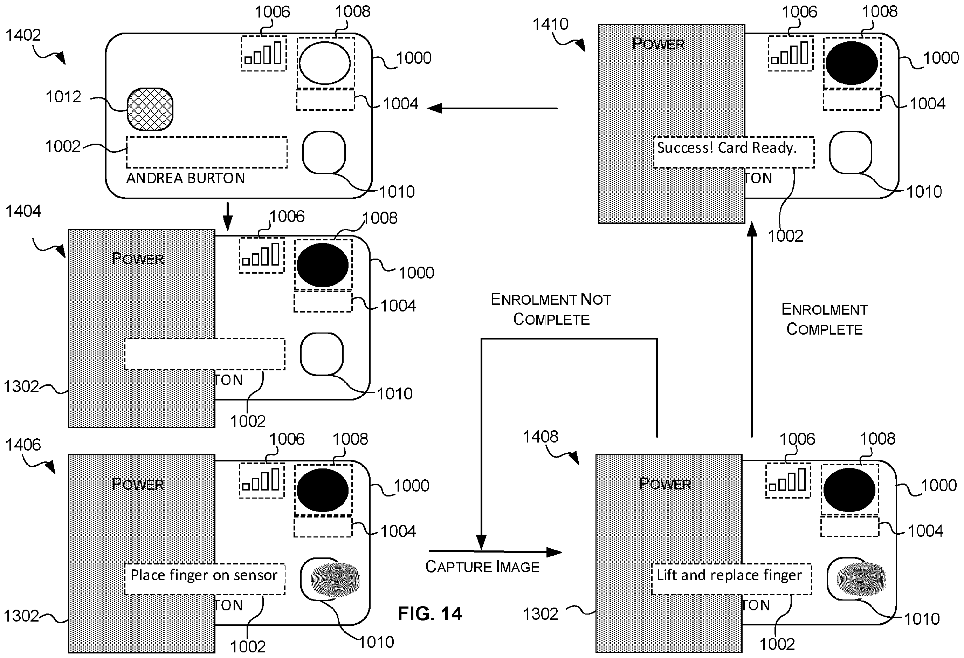

Reference is now made to FIG. 14 which illustrates an example use of the plurality of display areas 1002, 1004, 1006, 1008 of the card 1000 of FIG. 10 when the card 1000 is operating in non-terminal enrolment mode. In non-terminal enrolment mode the card 1000 is not in contactless or contact communication with a terminal, the card 1000 is receiving power from an external power source 1302 or from a power source built in to the card, and the card is being used to store biometric information on the card that identifies the user of the card. The external power source 1302 may be any suitable external power source for powering a smart card 1000 such as, but not limited to, the external power sources described above. The external power source 1302 may preferably be designed so as to not obscure the main display area 1002 so that the main display area 1002 can be used to provide data/information to the user when operating in non-terminal enrolment mode. In this example, the main display area 1002 and the fourth display area 1008 are used to display non-authenticated and/or authenticated information to the user.

Specifically, in the example of FIG. 14, the card 1000 starts in a first state 1402 where the card 1000 is not receiving power and thus all of the plurality of display areas 1002, 1004, 1006 and 1008 are inactive. Similar to FIGS. 11, 12 and 13, the placement of the user's finger on the biometric sensor is indicated in FIG. 14 by a fingerprint. When the card 1000 is subsequently connected to an external power source 1302 such that the card 1000 is receiving power therefrom, the card 1000 is transitioned to a second state 1404. In the second state 1404 the fourth display area 1008 is activated so as to illuminate the second graphic. This may indicate that the card 1000 is receiving power from the external power source 1302.

Once the card 1000 receives sufficient power from the external power source 1302, the card 1000 is transitioned to a third state 1406 where the main display area 1002 is activated and used to provide the user with instructions regarding beginning the enrolment (e.g. storing of biometric information). For example, as shown in FIG. 14, the main display area 1002 may be used to display a message, such as "Place finger on sensor". In some cases this may be considered authenticated information.

Once the user places their finger on the biometric sensor 1010, a biometric image capture is performed on the user (e.g. an image of the user's finger is captured). If the biometric image capture is successful, the card 1000 is transitioned to a fourth state 1408 where the main display area 1002 is activated and used to display further information to the user regarding enrolment. For example, the main display area 1002 may be used to display a message such as "Lift and replace finger". The fourth state 1408 may be repeated until enrolment is complete, for example until sufficient biometric images have been captured of the user's finger.

In this example, once enrolment is complete, the card 1000 may be transitioned to a fifth state 1410 where the main display area 1002 is activated to display information to confirm enrolment is complete. For example, as shown in FIG. 14 the main display area 1002 may be used to display a message, such as "Success! Card Ready." In other cases, once the biometric enrolment is complete, the card 1000 may be configured to additionally, or alternatively display authenticated information related to the card or the account associated with the card 1000, such as, but limited to the credit card limit.

If the card 1000 is subsequently disconnected from the external power source such that the card 1000 is no longer receiving power, the card 1000 may be transitioned back to the first state 1402 where none of the plurality of display areas 1002, 1004, 1006, 1008 are active. Transitioning the card 1000 back to the first state 1402 may comprise deactivating the main display area 1002 such that it does not display information and deactivating the fourth display area such that the second graphic is not illuminated. Depending on the technology used to implement the display screen this may comprise removing power to the main display area 1002 and the fourth display area 1008; or actively blanking the main display area 1002 and the fourth display area 1008. In some cases, once the biometric enrolment is complete the card 1000 may be prohibited from, or locked out from, entering non-terminal enrolment mode again. Specifically, in some cases, once the biometric enrolment is complete the card 1000 may not be able to repeat the sequence of states 1404, 1406, 1408 and 1410 shown in FIG. 14.

In some cases, the enrolment may comprise enrolling more than one finger. In these cases, after the card has transitioned through states 1404 to 1408 for a first finger, the card 1000 may be transitioned to a state in which one of the display areas is used to notify the user that they are to switch fingers. The card may then transition through states 1406 to 1408 again for the next finger and so on until each finger has been enrolled. Once a predetermined number of fingers have been enrolled, the card 1000 may transition to states 1410 and 1402.

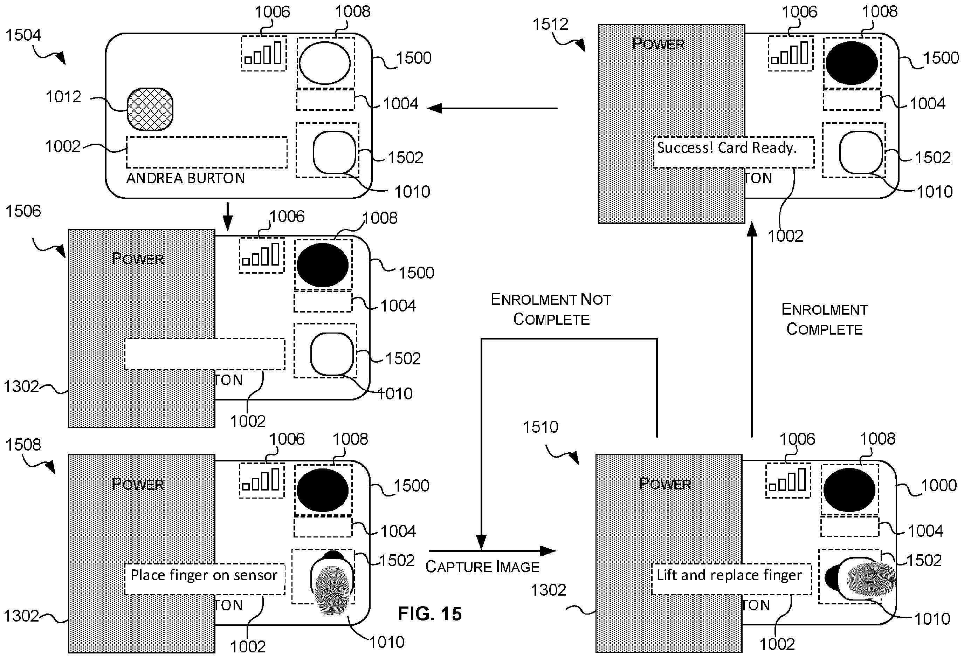

Reference is now made to FIG. 15 which illustrates a second example implementation of the device 100 of FIG. 1. In this example the device 100 is implemented as smart card 1500 wherein the display screen comprises multiple display areas. The smart card 1500 of FIG. 15 is the same as the smart card 1000 of FIG. 10 except the display screen comprises an additional graphic display area (or areas) 1502 situated around the biometric sensor 1010.

FIG. 15 illustrates an example use of the plurality of display areas 1002, 1004, 1006, 1008, 1502 to display authenticated and non-authenticated information when the card 1500 is operating in non-terminal enrolment mode. In non-terminal enrolment mode the card 1500 is not in contactless or contact communication with a terminal, the card 1000 is receiving power from an external power source 1302 or from a power source built in to the card, and the card is being used to store biometric information on the card that identifies the user of the card. Similar to the example of FIG. 14, the card 1500 starts in a first state 1504 in which the card 1500 is not receiving power and thus all of the plurality of display areas 1002, 1004, 1006, 1008 and 1502 are inactive. The card 1500 then transitions to states 1506, 1508, 1510 and 1512 which generally correspond to states 1404, 1406, 1408 and 1410 of FIG. 14 respectively except in states 1506 and 1508, the new graphic display area 1502 is activated to provide instruction to the user as to where to place their finger on the biometric sensor 1010 during the enrolment process. For example, one of a number of graphical segments may illuminate on the display area 1502 to guide the user as to where and how to align their finger pad on the biometric sensor. In some cases, an improved biometric template may be obtained if many different types of images of a finger are gathered during enrolment, for example, images preferably cover the finger tip as well as the finger pad and images may be gathered where the finger approaches from the short edge of the card 1500 and from the long edge of the card 1500 . The graphical segments on the display area 1502 may illuminate in a similar manner and sequence to that set out in the Applicant's US Published Patent Application No. 2019/0179438 and/or US Patent Application No. 62/872,524. Specifically, these US Patent Applications describe use of user indicators mounted on physical finger guides to instruct a user during enrolment. In the example shown in FIG. 15 however, the user indicators are provided as graphics on display areas on the card itself, rather than being mounted on an external power source.

In some cases, once the biometric enrolment is complete the card 1500 may be prohibited from, or locked out from, entering non-terminal enrolment mode again. Specifically, in some cases, once the biometric enrolment is complete the card 1500 may not be able to repeat the sequence of states 1506, 1508, 1510 and 1512 shown in FIG. 15.

In some cases, the enrolment may comprise enrolling more than one finger. In these cases, after the card has transitioned through states 1506 to 1510 for a first finger, the card 1500 may be transitioned to a state in which one of the display areas is used to notify the user that they are to switch fingers. The card may then transition through states 1508 to 1510 again for the next finger and so on until each finger has been enrolled. Once a predetermined number of fingers have been enrolled, the card 1500 may transition to states 1512 and 1504.

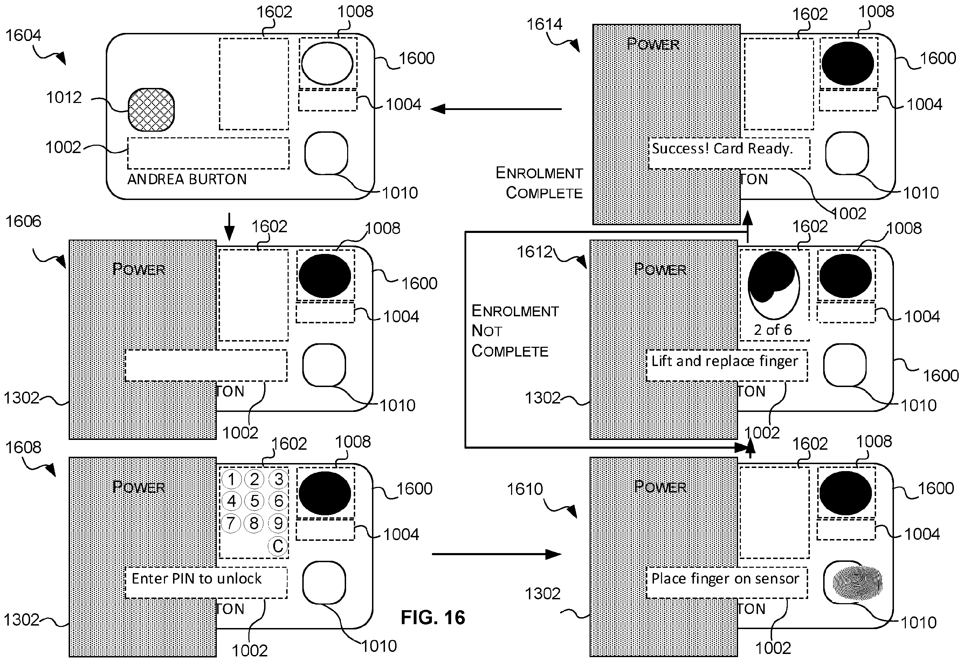

Reference is now made to FIG. 16 which illustrates a third example implementation of the device 100 of FIG. 1. In this example the device 100 is implemented as smart card 1600 with a display screen that comprises multiple display areas. The smart card 1600 of FIG. 16 is the same as the smart card 1000 of FIG. 10 except the display screen does not comprise the third highlight display area, but instead comprises an additional graphic display area (or areas) 1602 that is implemented as a touch display area or screen. It will be evident to a person of skill in the art that this is an example only and that in other examples some or all of the other display areas 1002, 1004 and 1008 may also be implemented as touch display area or screen. In an alternative embodiment of the card 1600 in FIG. 16, the plurality of display areas 1002, 1004, 1008 and 1602 may each be individual display screens ortouch screens. In a further alternative embodiment of the device in FIG. 16, some of the plurality of display areas 1002, 1004, 1008 and 1602 may be display areas of a single display or touch screen while the remainder are each individual display or touch screens.

FIG. 16 illustrates an example use of the plurality of display areas 1002, 1004, 1008 and 1602 when the card 1600 is operating in non-terminal enrolment mode. In non-terminal enrolment mode the card 1600 is not in contactless or contact communication with a terminal, the card 1600 is receiving power from an external power source 1302 or from a power source built in to the card, and the card 1600 is being used to store biometric information on the card that identifies the user of the card. The external power source 1302 may be any suitable external power source for powering a smart card 1600 such as, but not limited to, the external power sources described above. The external power source 1302 may preferably be designed so as to not obscure the main display area 1002 so that the main display area 1002 can be used to provide data/information to the user when operating in non-terminal enrolment mode. In this example, the main display area 1002, the fourth display area 1008 and the new display area 1602 are used to display non-authenticated and/or authenticated information to the user.

Specifically, in the example of FIG. 16, the card 1600 starts in a first state 1604 where the card is not receiving power and thus all of the plurality of display areas 1002, 1004, 1008 and 1602 are inactive. Similar to FIGS. 11-15, the placement of the user's finger on the biometric sensor is indicated in FIG. 16 by a fingerprint. When the card 1600 is subsequently connected to an external power source 1302 such that the card 1600 is receiving power therefrom, the card 1600 is transitioned to a second state 1606. In the second state 1606 the fourth display area 1008 is activated so as to illuminate the second graphic. This may indicate that the card 1600 is receiving power from the external power source 1302.

Once the card 1600 receives sufficient power from the external power source 1302, the card 1600 is transitioned to a third state 1608 where the main display area 1002 is activated and used to provide the user with instructions regarding unlocking the card. For example, as shown in FIG. 16, the main display area 1002 may be used to display a message, such as "Enter PIN to unlock". At the same time, touch display area 1602, may display a user interface to enable a user to enter data, such as a PIN, gesture, swipe, movement or tap in order to unlock the card 1600. Optionally, the main display area 1002 may echo the data input by the user in the touch display area 1602.

Once the card 1600 is successfully unlocked, the card 1600 is transitioned to a fourth state 1610 where the touch display area 1602 is cleared or blanked (since it is no longer needed during the remainder of the process) and the main display area 1002 is activated and used to provide the user with instructions regarding beginning the enrolment (e.g. storing of biometric information). For example, as shown in FIG. 16, the main display area 1002 may be used to display a message, such as "Place finger on sensor".

Once the user places their finger on the biometric sensor 1010, a biometric image capture is performed on the user (e.g. an image of the user's finger is captured). If the biometric image capture is successful, the card 1600 is transitioned to a fifth state 1612 where the main display area 1002 is activated and used to display further information to the user regarding enrolment. For example, the main display area 1002 may be used to display a message such as "Lift and replace finger". In another example, the touch display area 1602 may be used to display information connected with the progress and/or quality of the enrolment, for example in the case of a fingerprint enrolment, the touch display area 1602 may show a count-down of the number of images required to be captured, and/or a graphical image of which parts of the finger pad have already been imaged and which remain to be imaged. The fifth state 1612 may be repeated until enrolment is complete, for example until sufficient biometric images have been captured of the user's finger.

In this example, once enrolment is complete, the card 1600 may be transitioned to a sixth state 1614 where the main display area 1002 is activated to display information to confirm enrolment is complete. For example, as shown in FIG. 16 the main display area 1002 may be used to display a message, such as "Success! Card Ready." The touch display area 1602 may also be deactivated, cleared or blanked.

If the card 1600 is subsequently disconnected from the external power source such that the card 1600 is no longer receiving power, the card 1600 may be transitioned back to the first state 1604 where none of the plurality of display areas 1002, 1004, 1008, 1602 are active. Transitioning the card 1600 back to the first state 1604 may comprise deactivating the main display area 1002 such that it does not display information and deactivating the fourth display area 1008 such that the second graphic is not illuminated. Depending on the technology used to implement the display screen this may comprise removing power to the main display area 1002 and the fourth display area 1008; or actively blanking the main display area 1002 and the fourth display area 1008.

In some cases, once the biometric enrolment is complete the card 1600 may be prohibited from, or locked out from, entering non-terminal enrolment mode again. Specifically, in some cases, once the biometric enrolment is complete the card 1600 may not be able to repeat the sequence of states 1606, 1608, 1610, 1612 and 1614 shown in FIG. 16.

In some cases, the enrolment may comprise enrolling more than one finger. In these cases, after the card has transitioned through states 1606 to 1612 for a first finger, the card 1500 may be transitioned to a state in which one of the display areas is used to notify the user that they are to switch fingers. The card may then transition through states 1610 to 1612 again for the next finger and so on until each finger has been enrolled. Once a predetermined number of fingers have been enrolled, the card 1600 may transition to states 1614 and 1604.

The nature of the states and sequence of states in FIGS. 14, 15 and 16 are just three examples to illustrate the principle of using different display and touch areas, highlighting graphics and conditionally displaying and blanking information during biometric enrolment on a smart card. Other states and sequences are possible.

In any of the examples of FIGS. 11 to 16, when the card 1000 is receiving power (either from the terminal 1102, 102 or the external power source 1302) and after the user has been biometrically authenticated, the user may be able to change which of the plurality of display areas 1002, 1004, 1006, 1008 are active and/or what information is displayed on one or more of the display areas 1002, 1004, 1006, 1008 by performing a gesture in relation to, for example, the biometric sensor 1010. For example, the user may be able to change which display areas 1002, 1004, 1006, 1008 are active and/or what information is displayed by performing a gesture, such as a tap gesture or a swipe gesture, on the biometric sensor. In some examples, there may be a list of information which can be displayed in a specific display area and the user may cause that display area to scroll through the listed information by performing a specific gesture on the biometric sensor. For example, the dynamic display area 1004 may be configured to display one of the transaction amount and the card balance and the user may be able to scroll through the transaction amount and card balance by performing a certain gesture (e.g. tapping on the fingerprint sensor). In other examples, performing a different gesture (e.g. swiping the fingerprint sensor in a particular direction) may cause one or more of the display areas to be deactivated and/or blanked. For example, in some cases swiping the fingerprint sensor from right to left may cause the dynamic display area 1004 to be deactivated and blanked.

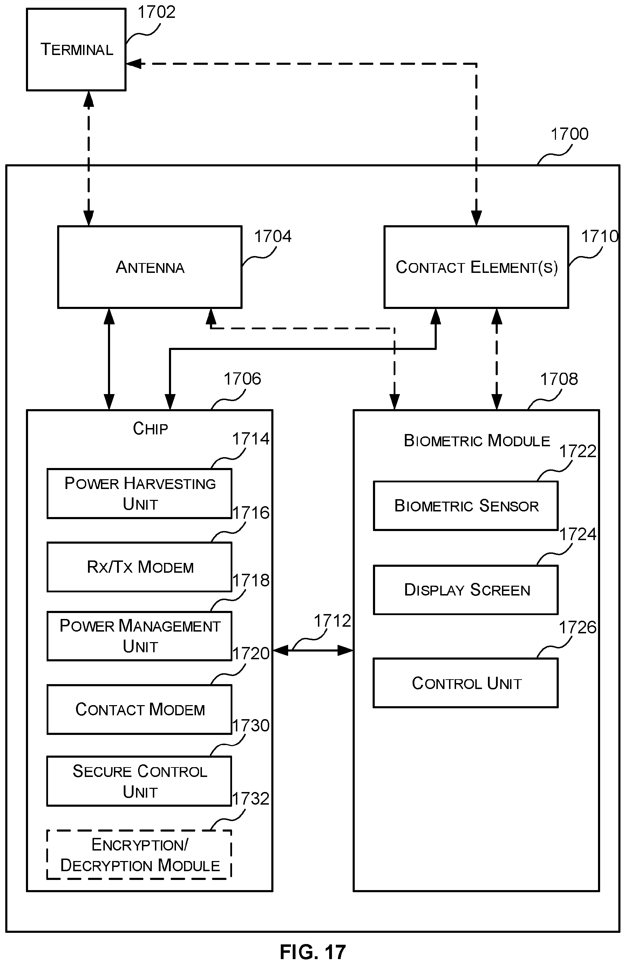

While in the examples described above there is a single control unit, in other examples the functionality performed by the single control unit may be distributed across a plurality of control units. All of the control units may form part of the biometric module or one or more of the control units may form part of another modules, such as, but not limited to the chip 106. For example, reference is now made to FIG. 17 which illustrates a second example device 1700 capable of communicating with a terminal 102 via a contact and/or contactless interface to perform a first function. The device 1700 of FIG. 17 is the same as the device 100 of FIG. 1 in that it comprises an antenna 1704, contact element(s) 1710, a chip 1706 and a biometric module 1708; the chip 1706 comprises a power harvesting unit 1714, a transceiver modem 1716, a power management unit 1718 and a contact modem 1720; and the biometric module comprises a biometric sensor 1722, a display screen 1724 and a control unit 1726 which generally correspond to the corresponding components of FIG. 1. However, the chip 1706 of FIG. 17 also comprises a secure control unit 1730 and optionally an encryption/decryption module 1732. The secure control unit 1730 may be configured to perform at least a portion of the functionality of the control unit 126 of FIG. 1. For example the secure control unit 1730 may be configured to perform all of a portion of the biometric authentication based on the biometric data captured by the biometric sensor 1722; and/or the secure control unit 1730 may be configured to control the display screen 1724 (or display areas thereof) based on whether the biometric authentication was successful and/or one or more other detected conditions, such as, but not limited to the operating mode of the device. The secure control unit 1730 may control the erasure of authenticated information from the storage elements of the biometric module 1708 and/or the chip 1706. In some cases, any communication between the chip 1706 and the biometric module 1708 may be encrypted. For example, any communication sent from the chip 1706 to the biometric module may be encrypted by the encryption/decryption module 1732 and any communication received by the chip 1706 from the biometric module may be decrypted by the encryption/decryption module 1732.

## Claims

1. A biometric module (200; 700; 800) for a smart card (100) configured to perform contactless or contact communication with a terminal, the module comprising:
a biometric sensor (208; 708; 822);
a display screen (212; 712; 822); and
a control unit (204; 704; 804) configured to:
cause the biometric sensor to capture biometric data of a user which can be used to biometrically authenticate the user;
obtain biometric authentication information indicating whether the user was biometrically authenticated based on the captured biometric data; and
in response to the biometric authentication information indicating the user was biometrically authenticated, cause the display screen to display authenticated information;
**characterised in that**:
the biometric module is powered by a removable external power source and the control unit is further configured to, subsequent to causing the display screen to display authenticated information, determine whether the biometric module is currently receiving power from the external power source and in response to determining the biometric module is not currently receiving power from an external power source, cause the display screen to cease displaying the authenticated information.

2. The biometric module of claim 1, further comprising one or more charging elements (306, 310) for storing charge, the one or more charging elements being arranged to be charged when the biometric module is receiving power from an external power source.

3. The biometric module of claim 2, wherein the one or more charging elements comprises one or more capacitors.

4. The biometric module of claim 2 or claim 3, wherein the control unit is further configured to only cause the display screen to display authenticated information if the charge stored by the one or more charging elements exceeds a threshold.

5. The biometric module of claim 4, wherein the threshold is set such that the one or more charging elements hold sufficient charge to cause the display screen to display a different image when the module is not receiving power from the external power source.

6. The biometric module of claim 4 or claim 5, further comprising a threshold detecting circuit for detecting whether the charge stored by the one or more charging elements exceeds the threshold.

7. The biometric module of claim 6, wherein the threshold detecting circuit is a brown-out detection circuit.

8. The biometric module of any of claims 2 to 7, wherein the control unit is configured to use the energy stored in the one or more charging elements to cause the display screen to cease displaying the authenticated information.

9. The biometric module of any of claims 1 to 8, wherein the control unit is configured to cause the display screen to cease displaying the authenticated information by blanking the display screen.

10. The biometric module of any preceding claim, wherein the control unit is further configured to:
subsequent to causing the display screen to display authenticated information, cause the biometric sensor to capture proximity data indicative of whether the user is proximate the biometric module;
obtain proximity information indicating whether, based on the captured proximity data whether the user is proximate the biometric module; and
in response to the proximity information indicating that the user is not proximate the biometric module, cause the display screen to cease displaying the authenticated information.

11. The biometric module of claim 10, wherein the biometric sensor is a fingerprint sensor and the proximity data comprises data indicative of whether a user's finger is currently in contact with the fingerprint sensor.

12. The biometric module of claim 10 or claim 11, wherein the control unit is further configured to determine whether the user is proximate to the biometric module based on the proximity data captured by the biometric sensor.

13. The biometric module of any preceding claim, wherein the control unit is further configured to perform at least a portion of the biometric authentication of the user based on the biometric data captured by the biometric sensor.

14. The biometric module of any of claims 1 to 12, wherein the control unit is configured to receive the biometric authentication information from an external component that performs the biometric authentication of the user based on the biometric data captured by the biometric sensor.

15. A smart card (100) for contactless or contact communication with a terminal, the smart card comprising:
An embedded chip (106) configured to generate data for communication to the terminal to perform a first function associated with the smart card; and
the biometric module of any of claims 1 to 14.

16. The smart card of claim 15, further comprising an antenna (104) for receiving a wireless signal emitted by the terminal, and wherein the authenticated information comprises information to perform the first function associated with the smart card.

## Patentansprüche

1. Biometrisches Modul (200; 700; 800) für eine Chipkarte (100), die konfiguriert ist, um eine kontaktlose oder kontaktbehaftete Kommunikation mit einem Endgerät durchzuführen, wobei das Modul Folgendes umfasst:
einen biometrischen Sensor (208; 708; 822);
einen Anzeigebildschirm (212; 712; 822); und
eine Steuereinheit (204; 704; 804), die zu Folgendem konfiguriert ist:
Veranlassen des biometrischen Sensors, biometrische Daten eines Benutzers zu erfassen, die zu einer biometrischen Authentifizierung des Benutzers verwendet werden können;
Erlangen von biometrischen Authentifizierungsinformationen, die angeben, ob der Benutzer basierend auf den erfassten biometrischen Daten biometrisch authentifiziert wurde; und
als Reaktion auf die biometrische Authentifizierungsinformationen, die angeben, dass der Benutzer biometrisch authentifiziert wurde, Veranlassen des Anzeigebildschirms, authentifizierte Informationen anzuzeigen;
**dadurch gekennzeichnet, dass**:
das biometrische Modul durch eine entfernbare externe Stromquelle mit Strom versorgt wird und die Steuereinheit ferner konfiguriert ist, um nach Veranlassen des Anzeigebildschirms, authentifizierte Informationen anzuzeigen, zu bestimmen, ob das biometrische Modul derzeit Strom von der externen Stromquelle empfängt, und als Reaktion auf ein Bestimmen, dass das biometrische Modul derzeit keinen Strom von einer externen Stromquelle empfängt, zu veranlassen, dass der Anzeigebildschirm ein Anzeigen der authentifizierten Informationen beendet.

2. Biometrisches Modul nach Anspruch 1, ferner umfassend ein oder mehrere Ladeelemente (306, 310) zum Speichern von Ladung, wobei das eine oder die mehreren Ladeelemente angeordnet sind, um aufgeladen zu werden, wenn das biometrische Modul Strom von einer externen Stromquelle empfängt.

3. Biometrisches Modul nach Anspruch 2, wobei das eine oder die mehreren Ladeelemente einen oder mehrere Kondensatoren umfassen.

4. Biometrisches Modul nach Anspruch 2 oder Anspruch 3, wobei die Steuereinheit ferner konfiguriert ist, um den Anzeigebildschirm nur dann zu veranlassen, authentifizierte Informationen anzuzeigen, wenn die von dem einen oder den mehreren Ladeelementen gespeicherte Ladung einen Schwellenwert überschreitet.

5. Biometrisches Modul nach Anspruch 4, wobei der Schwellenwert derart eingestellt ist, dass das eine oder die mehreren Ladeelemente ausreichend Ladung halten, um den Anzeigebildschirm zu veranlassen, ein anderes Bild anzuzeigen, wenn das Modul keinen Strom von der externen Stromquelle empfängt.

6. Das biometrische Modul nach Anspruch 4 oder Anspruch 5, ferner umfassend eine Schwellenwerterkennungsschaltung zum Erkennen, ob die von dem einen oder den mehreren Ladeelementen gespeicherte Ladung den Schwellenwert überschreitet.

7. Biometrisches Modul nach Anspruch 6, wobei die Schwellenwerterkennungsschaltung eine Brownout-Erkennungsschaltung ist.

8. Biometrisches Modul nach einem der Ansprüche 2 bis 7, wobei die Steuereinheit konfiguriert ist, um die in dem einen oder den mehreren Ladeelementen gespeicherte Energie zu verwenden, um den Anzeigebildschirm zu veranlassen, ein Anzeigen der authentifizierten Informationen zu beenden.

9. Biometrisches Modul nach einem der Ansprüche 1 bis 8, wobei die Steuereinheit konfiguriert ist, um den Anzeigebildschirm zu veranlassen, ein Anzeigen der authentifizierten Informationen durch Austasten des Anzeigebildschirms zu beenden.

10. Biometrisches Modul nach einem der vorhergehenden Ansprüche, wobei die Steuereinheit ferner zu Folgendem konfiguriert ist:
nach Veranlassen des Anzeigebildschirms, authentifizierte Informationen anzuzeigen, Veranlassen des biometrischen Sensors, Annäherungsdaten zu erfassen, die indikativ dafür sind, ob der Benutzer in der Nähe des biometrischen Moduls ist;
Erlangen von Annäherungsinformationen, die angeben, ob der Benutzer basierend auf den erfassten Annäherungsdaten in der Nähe des biometrischen Moduls ist; und
als Reaktion darauf, dass die Annäherungsinformationen angeben, dass der Benutzer nicht in der Nähe des biometrischen Moduls ist, Veranlassen des Anzeigebildschirms, ein Anzeigen der authentifizierten Informationen zu beenden.

11. Biometrisches Modul nach Anspruch 10, wobei der biometrische Sensor ein Fingerabdrucksensor ist und die Annäherungsdaten Daten umfassen, die indikativ dafür sind, ob der Finger eines Benutzers derzeit in Kontakt mit dem Fingerabdrucksensor ist.

12. Biometrisches Modul nach Anspruch 10 oder Anspruch 11, wobei die Steuereinheit ferner konfiguriert ist, um basierend auf den Annäherungsdaten, die von dem biometrischen Sensor erfasst werden, zu bestimmen, ob der Benutzer in der Nähe des biometrischen Moduls ist.

13. Biometrisches Modul nach einem der vorhergehenden Ansprüche, wobei die Steuereinheit ferner konfiguriert ist, um zumindest einen Teil der biometrischen Authentifizierung des Benutzers basierend auf den biometrischen Daten, die von dem biometrischen Sensor erfasst werden, durchzuführen.

14. Biometrisches Modul nach einem der Ansprüche 1 bis 12, wobei die Steuereinheit konfiguriert ist, um die biometrischen Authentifizierungsinformationen von einer externen Komponente zu empfangen, die die biometrische Authentifizierung des Benutzers basierend auf den biometrischen Daten, die von dem biometrischen Sensor erfasst werden, durchführt.

15. Chipkarte (100) für eine kontaktlose oder kontaktbehaftete Kommunikation mit einem Endgerät, wobei die Chipkarte Folgendes umfasst:
einen eingebetteten Chip (106), der konfiguriert ist, um Daten für eine Kommunikation mit dem Endgerät zu erzeugen, um eine erste Funktion durchzuführen, die mit der Chipkarte assoziiert ist; und
das biometrische Modul nach einem der Ansprüche 1 bis 14.

16. Chipkarte nach Anspruch 15, ferner umfassend eine Antenne (104) zum Empfangen eines Funksignals, das von dem Endgerät emittiert wird, und wobei die authentifizierten Informationen Informationen zum Durchführen der ersten Funktion, die mit der Chipkarte assoziiert ist, umfassen.

## Revendications

1. Module biométrique (200 ; 700 ; 800) pour une carte à puce (100) configuré pour effectuer une communication sans contact ou à contact avec un terminal, le module comprenant :
un capteur biométrique (208 ; 708 ; 822) ;
un écran d'affichage (212 ; 712 ; 822) ; et
une unité de commande (204 ; 704 ; 804) configurée pour :
amener le capteur biométrique à capturer des données biométriques d'un utilisateur qui peuvent être utilisées pour authentifier biométriquement l'utilisateur ;
obtenir des informations d'authentification biométrique indiquant si l'utilisateur a été authentifié biométriquement sur la base des données biométriques capturées ; et
en réponse au fait que les informations d'authentification biométrique indiquent que l'utilisateur a été authentifié biométriquement, amener l'écran d'affichage à afficher des informations authentifiées ;
**caractérisé en ce que** :
le module biométrique est alimenté par une source d'alimentation externe amovible et l'unité de commande est en outre configurée pour, après avoir amené l'écran d'affichage à afficher des informations authentifiées, déterminer si le module biométrique reçoit actuellement une alimentation de la source d'alimentation externe et en réponse à la détermination que le module biométrique ne reçoit pas actuellement d'alimentation d'une source d'alimentation externe, amener l'écran d'affichage à cesser d'afficher les informations authentifiées.

2. Module biométrique selon la revendication 1, comprenant en outre un ou plusieurs éléments de charge (306, 310) pour stocker une charge, l'un ou plusieurs éléments de charge étant conçus pour être chargés lorsque le module biométrique reçoit de l'alimentation d'une source d'alimentation externe.

3. Module biométrique selon la revendication 2, dans lequel l'un ou plusieurs éléments de charge comprennent un ou plusieurs condensateurs.

4. Module biométrique selon la revendication 2 ou la revendication 3, dans lequel l'unité de commande est en outre configurée pour amener l'écran d'affichage à afficher les informations authentifiées uniquement si la charge stockée par l'un ou plusieurs éléments de charge dépasse un seuil.

5. Module biométrique selon la revendication 4, dans lequel le seuil est défini de telle sorte que l'un ou plusieurs éléments de charge détiennent une charge suffisante pour amener l'écran d'affichage à afficher une image différente lorsque le module ne reçoit pas d'alimentation de la source d'alimentation externe.

6. Module biométrique selon la revendication 4 ou la revendication 5, comprenant en outre un circuit de détection de seuil pour détecter si la charge stockée par l'un ou plusieurs éléments de charge dépasse le seuil.

7. Module biométrique selon la revendication 6, dans lequel le circuit de détection de seuil est un circuit de détection de baisse de tension.

8. Module biométrique selon l'une quelconque des revendications 2 à 7, dans lequel l'unité de commande est configurée pour utiliser l'énergie stockée dans l'un ou plusieurs éléments de charge pour amener l'écran d'affichage à cesser d'afficher les informations authentifiées.

9. Module biométrique selon l'une quelconque des revendications 1 à 8, dans lequel l'unité de commande est configurée pour amener l'écran d'affichage à cesser d'afficher les informations authentifiées en masquant l'écran d'affichage.

10. Module biométrique selon l'une quelconque des revendications précédentes, dans lequel l'unité de commande est en outre configurée pour :
après avoir amené l'écran d'affichage à afficher les informations authentifiées, amener le capteur biométrique à capturer des données de proximité indiquant si l'utilisateur est à proximité du module biométrique ;
obtenir des informations de proximité indiquant si, sur la base des données de proximité capturées, l'utilisateur est à proximité du module biométrique ; et
en réponse au fait que les informations de proximité indiquent que l'utilisateur n'est pas à proximité du module biométrique, amener l'écran d'affichage à cesser d'afficher les informations authentifiées.

11. Module biométrique selon la revendication 10, dans lequel le capteur biométrique est un capteur d'empreintes digitales et les données de proximité comprennent des données indiquant si le doigt d'un utilisateur est actuellement en contact avec le capteur d'empreintes digitales.

12. Module biométrique selon la revendication 10 ou la revendication 11, dans lequel l'unité de commande est en outre configurée pour déterminer si l'utilisateur est à proximité du module biométrique sur la base des données de proximité capturées par le capteur biométrique.

13. Module biométrique selon l'une quelconque des revendications précédentes, dans lequel l'unité de commande est en outre configurée pour effectuer au moins une partie de l'authentification biométrique de l'utilisateur sur la base des données biométriques capturées par le capteur biométrique.

14. Module biométrique selon l'une quelconque des revendications 1 à 12, dans lequel l'unité de commande est configurée pour recevoir les informations d'authentification biométrique en provenance d'un composant externe qui effectue l'authentification biométrique de l'utilisateur sur la base des données biométriques capturées par le capteur biométrique.

15. Carte à puce (100) pour une communication sans contact ou à contact avec un terminal, la carte à puce comprenant :
une puce intégrée (106) configurée pour générer des données à communiquer au terminal afin d'exécuter une première fonction associée à la carte à puce ; et
le module biométrique selon l'une quelconque des revendications 1 à 14.

16. Carte à puce selon la revendication 15, comprenant en outre une antenne (104) pour recevoir un signal sans fil émis par le terminal, et dans laquelle les informations authentifiées comprennent des informations pour effectuer la première fonction associée à la carte à puce.
